# EUROPÄISCHE PATENTANMELDUNG

(11) **EP 2 581 132 A2**
(43) Veröffentlichungstag der Anmeldung: **17.04.2013**
(21) Anmeldenummer: 12007102.2
(22) Anmeldetag: 12.10.2012
(51) Int. Cl.: B01J 8/06

(54) **Rohrbündelreaktor**

(30) Priorität: 13.10.2011 DE 102011084476
(71) Anmelder: MAN Diesel & Turbo SE, 86153 Augsburg (DE)
(72) Erfinder: Lehr, Herrn Manfred, 94469 Deggendorf (DE)

(57) **Zusammenfassung**

Bei einem Rohrbündelreaktor für katalytische Gasphasenreaktionen, mit einem Bündel Reaktionsrohre, das von einem zylindrischen Reaktormantel umschlossen ist, der einen Mantelraum ausbildet, in dem die Reaktionsrohre von einem Wärmeträger umströmt werden, wobei die Reaktionsrohre von einem Reaktionsgas durchströmt werden, ferner mit einem Wärmeträger-Vorlaufringkanal und einem Wärmeträger-Rücklaufringkanal, die den Reaktormantel in jeweils einem Endbereich des Zylinders umschließen und mit dem Mantelraum über eine Vielzahl von Mantelöffnungen in Strömungsverbindung stehen, wobei zumindest der Rücklaufringkanal frei von Unterkanälen ist, und mit einer außenliegenden Pumpe, deren Eintritt an den Wärmeträger-Rücklaufringkanal und deren Austritt an den Wärmeträger-Vorlaufringkanal angeschlossen ist und die den Wärmeträger in einem Kreislauf durch den Vorlaufringkanal, den Mantelraum und den Rücklaufringkanal umwälzt, werden Maßnahmen vorgeschlagen, die eine Erhöhung des Wirkungsgrades der außenliegenden Pumpe ermöglichen, indem sie eine Optimierung der Wärmeträgerströmung durch die Pumpe unterstützen.

## Beschreibung

Die Erfindung bezieht sich auf einen Rohrbündelreaktor für katalytische Gasphasenreaktionen, mit einem Bündel Reaktionsrohre, das von einem zylindrischen Reaktormantel umschlossen ist, der einen Mantelraum ausbildet, in dem die Reaktionsrohre von einem Wärmeträger umströmt werden, wobei die Reaktionsrohre von einem Reaktionsgas durchströmt werden, ferner mit einem Wärmeträger-Vorlaufringkanal und einem Wärmeträger-Rücklaufringkanal, die den Reaktormantel in jeweils einem Endbereich des Zylinders umschließen und mit dem Mantelraum über eine Vielzahl von Mantelöffnungen in Strömungsverbindung stehen, wobei zumindest der Rücklaufringkanal frei von Unterkanälen ist, und mit einer außenliegenden Pumpe, deren Eintritt an den Wärmeträger-Rücklaufringkanal und deren Austritt an den Wärmeträger-Vorlaufringkanal angeschlossen ist und die den Wärmeträger in einem Kreislauf durch den Vorlaufringkanal, den Mantelraum und den Rücklaufringkanal umwälzt.

Ein Rohrbündelreaktor ist ein Festbettreaktor, der die Möglichkeit bietet, zwischen dem in dem Festbett reagierenden Prozessgasgemisch bzw. Reaktionsgas und einem separaten Wärmeträger einen Wärmeaustausch herbeizuführen. Dabei kann die Reaktion prinzipiell sowohl eine endotherme wie auch eine exotherme sein. Das Festbett - im Wesentlichen ein granularer Katalysator - befindet sich in den Rohren (Reaktionsrohren) eines allgemein vertikal angeordneten Reaktionsrohrbündels, deren beide Enden abgedichtet in Rohrböden festgelegt sind und die innerhalb eines das Rohrbündel umgebenden Reaktormantels von dem Wärmeträger umspült werden. Das Prozessgasgemisch wird den Reaktionsrohren über eine den betreffenden Rohrboden überspannende Reaktorhaube zu- und ebenso über eine den anderen Rohrboden überspannende Reaktorhaube abgeführt. Der Wärmeträger, häufig ein Salzbad, wird mit einer oder mehreren Pumpen umgewälzt und von einem oder mehreren Wärmetauschern je nach der Art des Reaktionsprozesses erwärmt bzw. gekühlt. Er wird dem Reaktorinneren in der Regel durch den Reaktormantel umgebende Ringkanäle, die sich in der Nähe der Rohrböden befinden und die mit dem Mantelinneren, im folgenden auch als Mantelraum bezeichnet, über eine Vielzahl von Mantelöffnungen in Verbindung stehen, zu- bzw. abgeführt. Die Pumpen als auch die Wärmetauscher liegen gewöhnlich außerhalb des Reaktormantels.

Um für sämtliche Rohre des Reaktors - ein moderner Rohrbündelreaktor kann bis zu 30000 Rohre oder mehr enthalten - im Interesse eines einheitlichen Reaktionsablaufs und damit einer hohen Ausbeute und guten Selektivität des Reaktionsprodukts ein möglichst gleiches Temperaturprofil zu erhalten, kommt es darauf an, Unterschiede des Wärmeträgers bezüglich Temperatur und Strömungszustand in jeder zu den Reaktionsrohren senkrecht stehenden Ebene möglichst gering zu halten.

Voraussetzung für einen gleichmäßigen Wärmeübergang im Reaktorinneren sind gleiche in den Reaktor einströmende und aus dem Reaktor ausströmende Volumenströme über den Reaktorumfang. Dies wird im Allgemeinen dadurch erreicht, dass die Mantelöffnungen zwischen den Ringkanälen und dem Reaktorinneren dem jeweilig lokal vorherrschenden Strömungsdruck entsprechend über den Reaktorumfang unterschiedliche Durchtrittsquerschnitte aufweisen.

Zur Schaffung von konstanten Betriebsbedingungen bezüglich des Wärmeträger-Volumenstroms durch den Kühler schlägt die DE1963394 A ein Reaktorsystem vor, bei dem im Gehäuse des Wärmetauschers ein regelbarer Bypass vorgesehen ist, der je nach Kühlungsbedarf mehr oder weniger Wärmeträger zu den Wärmeübertragungsflächen leitet. Der Gesamtvolumenstrom durch den Kühler wird dadurch konstant gehalten. In einem Ausführungsbeispiel sind Pumpe und Wärmetauscher an gegenüberliegenden Seiten des Reaktors angeordnet. Bei dieser Anordnung wird der aus dem Wärmetauscher herausgeführte Wärmeträger zum oben gelegenen Wärmeträger-Rücklaufringkanal geführt. Dort teilt er sich auf die beiden Ringkanalhälften auf und vereinigt sich im Verlauf des Strömungsweges mit den aus den Mantelöffnungen des Reaktors austretenden erwärmten Wärmeträgerströmen. Am Ende des Ringkanals vereinigen sich die beiden Wärmeträgerströme und werden zur Pumpe geführt. Diese fördert den Wärmeträger-Gesamtstrom in den Wärmeträger-Vorlaufringkanal, wo sich dieser wieder auf die beiden Ringkanalhälften verteilt und über Mantelöffnungen in den Reaktor hineinströmt. Am anderen, stromabwärtigen Ende der Ringkanalhälften wird ein Teil des Wärmeträgers wieder zurück in den Wärmetauscher geführt. Gesonderte Vorrichtungen zur Mischung der aus dem Reaktor und aus dem Wärmetauscher kommenden Wärmeträgerströme sind nicht vorgesehen. Die Durchmischung erfolgt hauptsächlich durch die Pumpe, die der Wärmeträger mit einem hohen Grad an Verwirbelung - d. h. mit zahlreichen und/oder ausgedehnten Wirbelgebieten - durchströmt. Ein hoher Verwirbelungsgrad reduziert jedoch den Wirkungsgrad der Pumpe und erfordert umso mehr Pumpenleistung.

Für große Reaktoren mit entsprechend großer erforderlicher Pumpenleistung schlägt die DE3409159 A1 eine Aufteilung der Pumpenleistung auf zwei Pumpen vor, die an entgegengesetzten Stellen an die Ringkanäle angeschlossen werden. Hierdurch werden die maximalen Förderwege verringert und der Leistungsbedarf wird überproportional verringert. Der Wärmetauscher soll symmetrisch zwischen beiden Pumpen angeordnet werden und mit beiden Ringkanälen in Verbindung stehen. Der Rücklauf des Wärmetauschers ist über Stellglieder einstellbar, um die Temperatur der beiden Seiten des Reaktors regeln zu können. Gesonderte Mischvorrichtungen sind auch hier nicht vorgesehen. Die Durchmischung erfolgt auch hier hauptsächlich durch die beiden Pumpen.

Die Pumpe(n) und der Wärmetauscher können auf unterschiedliche Arten am Reaktor angeordnet werden. So wird in der WO2004/052525 A1 ein Reaktor beschrieben, bei dem sich eine Pumpe und ein Wärmetauscher an verschiedenen Positionen in Umfangsrichtung befinden. Ausführungsbeispiele zeigen Anordnungen mit 180°-Versatz und 90°-Versatz. Dabei wird eine gleichmäßige Einströmung des Wärmeträgers vom Zulaufkanal in den Wärmeträger-Vorlaufringkanal und von dort in das Reaktorinnere durch gebogene Leitbleche unterstützt. Weiterhin wird vorgeschlagen, zur Ergänzung der Durchmischung in der/den Pumpe(n) Mischer vor dem Eintritt in den Vorlaufringkanal oder innerhalb dieses Kanals anzuordnen. Die Mischer sind als Gitter oder Mischkammern ausgeführt.

Die Strömungsführung bei der Anordnung mit 180°-Versatz von Pumpe und Wärmetauscher ist identisch mit der wie bei DE1963394 A beschriebenen. Bei der Anordnung mit 90°-Versatz befindet sich im Wärmeträger-Vorlaufringkanal weiterhin ein Trennblech zur Steuerung der Wärmeträgerströme in das Reaktorinnere und in den Wärmetauscher.

Die DE 101 37 768 A1 stellt bei derartigen Reaktoren fest, dass eine Mischung des Wärmeträgers über dessen Strömungsquerschnitt im Reaktor nur in sehr begrenztem Maße stattfindet. Strebt man eine Umwälzpumpe mit hohem Wirkungsgrad an, ist auch die Mischwirkung der Pumpe unzureichend. Es wird als erforderlich angesehen, die unterschiedlich temperierten Wärmeträgerströme aus dem Reaktor und aus dem Wärmetauscher kommend noch vor Eintritt in die Pumpe weitgehend zu vermischen. Es wird vorgeschlagen, den aus dem Reaktor durch die Mantelöffnungen abgeführten Wärmeträger unmittelbar nach dem Eintritt desselben in den Wärmeträger-Rücklaufringkanal zusammen mit dem von dem außenliegenden Wärmetauscher kommenden Wärmeträger in einem in den Wärmeträger-Rücklaufringkanal eingebauten Mischkanal zu vermischen. Mittels eines ebenfalls in den Wärmeträger-Rücklaufringkanal eingebauten Verteilerkanals wird der vom Wärmetauscher kommende Wärmeträger in eine Vielzahl von feinen Einzelstrahlen aufgeteilt, die gleichmäßig in die durch die Mantelöffnungen kommenden Wärmeträger-Teilströme verteilt und vermischt werden.

Die zur Umwälzung des Wärmeträgers verwendeten Pumpen haben die Aufgabe, große Volumenströme bei relativ kleiner Förderhöhe umzuwälzen. Solange keine besonderen Anforderungen vorliegen, werden die Pumpen möglichst einfach ausgeführt, d.h. sie bestehen aus einem zylindrischen Pumpengehäuse und werden der Aufgabe entsprechend mit Axiallaufrädern ausgestattet. Die Pumpen werden üblicherweise zwischen oberem und unterem Ringkanal angeordnet wie in Fig. 4 der DE10137768 A1 dargestellt. Wegen der hohen Temperaturen des Wärmeträgers ist man jedoch bestrebt, möglichst viele Teile der Pumpe und den Antriebsmotor außerhalb des Wärmeträgersystems anzuordnen. Von daher wäre es ideal, wenn nur das Laufrad Berührung zum Wärmeträger hat. Dies bedingt jedoch lange Verbindungswellen zwischen Antriebsmotor und dem Laufrad der Pumpe. Zur Gewährleistung eines schwingungsarmen Betriebs muss die Welle geeignet gelagert werden, bevorzugt ohne Berührung zum Wärmeträger. Damit ist eine fliegende Lagerung des Laufrads erforderlich. Um einen ausreichenden Abstand zur kritischen Drehzahl zu erhalten, muss die Welle entsprechend steif ausgeführt sein. Der fliegende Teil der Verbindungswelle sollte somit aus Kosten- und Bauraumgründen möglichst kurz sein. Hierfür sind jedoch besondere konstruktive Maßnahmen notwendig.

Eine Konstruktion in dieser Hinsicht ist aus der JP59138794 A bekannt, gemäß der eine zu fördernde Flüssigkeit eine einfache Strömungsumkehr erfährt. Die Konstruktion weist eine Pumpe mit einem Pumpenleitrohr und einem Gehäuse auf, das das Pumpenleitrohr umschließt. Die Flüssigkeit strömt über eine Öffnung im unteren Teil des Gehäuses in das Gehäuse ein, dann im Bereich zwischen der Innenwand des Gehäuses und der Außenwand des Pumpenleitrohrs nach oben, über eine Öffnung im oberen Bereich des Pumpenleitrohrs in den Innenraum des Pumpenleitrohrs hin ein, durchströmt diesen von oben nach unten und strömt über eine Öffnung im unteren Bereich des Pumpenleitrohrs aus. Damit lässt sich eine kurze fliegende Welle erreichen, da die Lage des Laufrads unabhängig von der Geometrie der Ringkanäle gewählt werden kann.

Die DE10127365 A1 ist eine Weiterentwicklung der JP59138794 A mit doppelter Strömungsumkehr. Hier wird der Wärmeträger nach einer Umlenkung in einem weiteren Strömungskanal nach oben in den oberen Ringkanal eines Reaktors geführt. Damit lässt sich eine Stömungsumkehr im Reaktorrohrbündel von oben nach unten erreichen.

In der WO2004/052526 A1 ist ein Reaktor mit einer Pumpe und mit einem Bypass zum Wärmetauscher offenbart. In einer Ausführung, bei der der Wärmetauscher im Nebenschluss zum Reaktor angeordnet ist, wird der vom Wärmetauscher kommende Wärmeträger zunächst in einem externen Mischer mit dem vom Mantelraum des Reaktors kommenden erwärmten Wärmeträger gemischt und anschließend der Pumpe zugeführt. Die konstruktive Ausführung des Mischers ist nicht im Detail beschrieben. Auch über die konstruktive Ausführung der Zusammenführung der Teilströme von Mantelraum und Wärmetauscher werden keine Vorschläge gemacht.

In einer weiteren Ausführungsform wird ein Zweizonenreaktor mit relativ kurzen Reaktionszonen beschrieben, bei dem Pumpe und Wärmetauscher an verschiedenen Stellen am Reaktorumfang angeordnet sind. Die Pumpen der beiden Reaktionszonen werden auf gleicher Höhe angeordnet, vorzugsweise im Bereich der oberen Zone. Dadurch kann die Pumpenwelle verkürzt und die Betriebssicherheit erhöht werden. Diese Konstruktion bedingt entsprechende Umlenkungskanäle, um den Wärmeträger an die gewünschten Stellen der Ringkanäle zu führen. Es werden verschiedene Möglichkeiten von Verbindungskanälen zwischen Pumpe und Ringkanälen vorgestellt. Weiterhin ist eine Injektorpumpe dargestellt, die den Druck im Zulaufbereich der Pumpe erhöht und damit das Kavitationsverhalten bei leistungsstarken Pumpen verbessert.

Eine Mischvorrichtung ist beispielsweise aus der DE2245442 A bekannt. Dort ist ein Drallmischer zur Unterstützung der Entstehung von Turbulenzen beschrieben. Die Vorrichtung besteht aus einer Vielzahl von verdrehten streifenförmigen Elementen, die in verschiedenen Kombinationen parallel und in Strömungsrichtung hintereinander angeordnet sein können. Der Drehsinn von hintereinander liegenden Elementen kann gleich oder gegengleich sein. Die zum Mischen erforderliche Energie wird durch die Bewegung der Flüssigkeit gewonnen, die durch die Vorrichtung strömt.

Die bekannten Lösungen zur Führung des Wärmeträgers durch ein Reaktorsystem beschäftigen sich in erster Linie mit der Beeinflussung der Mengen einzelner Volumenströme. Werden Wärmeträgerströme unterschiedlicher Temperatur zusammengeführt, so wird stillschweigend davon ausgegangen, dass sich diese auch ohne zusätzliche Vorrichtungen hinreichend miteinander vermischen oder die Umwälzpumpe diese Mischung bewirkt. Dies ist tatsächlich bei einer wirkungsgradoptimierten - d. h. strömungsoptimierten, verwirbelungsarmen - Pumpe nicht der Fall, wie in DE10137768 A1 beschrieben.

Die DE10137768 A1 schlägt eine Mischvorrichtung noch im Wärmeträger-Rücklaufringkanal vor. Die vorgeschlagene Lösung ist jedoch sehr aufwändig, da der vom Wärmetauscher kommende gekühlte Wärmeträgerstrom gleichmäßig über die Lauflänge des Ringkanals verteilt werden muss. Das erfordert einen zusätzlichen Verteilerkanal mit entsprechend angepassten Öffnungen. Zudem erzeugen der Verteilerkanal und der anschließende Mischkanal einen hohen Druckverlust, was im Wärmetauscher zu einem unerwünschten Rückstau führt. Ferner kommt es längs des Strömungswegs zu unerwünschten Wärmeübergängen zwischen den Teilkanälen.

Ein externer Mischer vor dem Eintritt in die Pumpe, wie in der WO2004/052526 A1 vorgeschlagen, bringt einen erhöhten Platzbedarf mit sich. In der Regel ist man jedoch bestrebt, aus Gründen einer kompakten Bauweise die Pumpe möglichst nahe zum Reaktor anzuordnen. Dem steht der Platzbedarf des Mischers entgegen.

Für die Erzielung eines hohen Pumpenwirkungsgrades ist nicht nur ein strömungsoptimierter verwirbelungsarmer Zulauf zu dem und Durchlauf durch das Pumpenlaufrad wesentlich, sondern auch ein ebenso strömungsoptimierter Strömungskanal auf der Druckseite des Laufrades, da andernfalls - wie bei DE 10137768 A1 oder WO 2004/052526 A1 - der ansonsten erzielbare Wirkungsgrad nicht erreicht wird bzw. der sich ergebende Wirkungsgradverlust mit erhöhtem Aufwand an anderer Stelle ausgeglichen werden muss.

Der Erfindung liegt daher die Aufgabe zugrunde, einen Rohrbündelreaktor der eingangs genannten Art so auszubilden, dass eine Erhöhung des Wirkungsgrades der Pumpe wirtschaftlicher möglich ist.

Erfindungsgemäß wird diese Aufgabe durch die Rohrbündelreaktoren gemäß den Ansprüchen 1, 11 und 13 gelöst.

Die erfindungsgemäßen Rohrbündelreaktoren ermöglichen eine Erhöhung des Wirkungsgrades ihrer außenliegenden Pumpe, indem sie durch eine geeignete bauliche Ausbildung die für die Wirkungsgraderhöhung notwendige Optimierung der Wärmeträgerströmung durch die Pumpe unterstützen.

So wird mit der Lösung nach Anspruch 1 eine Reduzierung der Mischwirkung in einer strömungsoptimierten Pumpe kompensiert durch eine besondere Ausbildung des Wärmeträger-Rücklaufringkanals, mit der äußerst kostengünstig eine wirksame Durchmischung des aus dem Mantelraum austretenden Wärmeträgers mit dem aus dem Haupt-Wärmetauscher rücklaufenden Wärmeträger, die zueinander eine Temperaturdifferenz von üblicherweise 20 K bis 100 K aufweisen, erreicht wird. Dabei ist der Wärmeträger-Rücklaufringkanal über seine komplette Länge und über seinen kompletten Querschnitt als Rotationsmischer ausgebildet, wobei der gesamte Rücklauf des Wärmetauschers an dessen Anschlussstelle - aufgeteilt auf die beiden Ringkanalabschnitte - in den kompletten Ringkanalquerschnitt eingeleitet wird. Um eine schnelle und vollständige Durchmischung des Wärmeträger-Rücklaufs aus dem Wärmetauscher mit den aus dem Mantelraum durch die Mantelöffnungen eintretenden Wärmeträger-Teilströmen zu erzielen, weist jeder Abschnitt des Wärmeträger-Rücklaufringkanals mindestens zwei Vorrichtungen auf, mit denen der Rücklaufstrom um die Längsachse der Ringkanalabschnitte in Rotation versetzt wird. Diese Vorrichtungen sind längs der Ringkanalabschnitte verteilt angeordnet, sodass der Rücklaufstrom kurz nach seinem Eintritt in den Ringkanalabschnitt in Rotation versetzt wird und bis unmittelbar vor dem Zusammentreffen mit dem Wärmeträgerstrom aus dem anderen Ringkanalabschnitt am Austritt aus dem Wärmeträger-Rücklaufringkanal, d. h. am Zulauf zur außenliegenden Pumpe, in Rotation verbleibt. Eine schnelle und vollständige Durchmischung des Rücklaufstroms mit den aus den Mantelöffnungen quer zum rotierenden Rücklaufstrom austretenden Teilströmen ist somit gewährleistet. Eine gleichmäßige Durchmischung - d. h. gleiche Temperaturen in den durchmischten Wärmeträgerströmen - in den beiden Ringkanalabschnitten im Verhältnis zueinander wird dadurch gewährleistet, dass das Mengenverhältnis der aus dem Haupt-Wärmetauscher in die Ringkanalabschnitte eingeleiteten Abschnitts-Wärmeträgerströme zueinander dem Längenverhältnis der beiden Ringkanalabschnitte zueinander entspricht. Die Mantelöffnungen sind nach Art und Größe so ausgebildet, dass der Wärmeträgerstrom über den Umfang gleichverteilt aus dem Mantelraum in den Wärmeträger-Rücklaufringkanal eintritt. Der Wärmeträger-Gesamtstrom aus dem Wärmeträger-Rücklaufringkanal ist somit über seinen gesamten Querschnitt vollständig und gleichmäßig durchmischt, wenn er in die außenliegende Pumpe eintritt, sodass dort keine Mischung mehr stattfinden muss. Die Pumpe kann daher ausschließlich strömungsoptimiert sein - d. h. ohne Rücksicht auf irgendeine noch zu erzielende Mischwirkung. Der Einsatz einer solchen Hochleistungspumpe ermöglicht es wiederum, den Reaktor mit nur einer Pumpe betreiben zu können.

Bei der Lösung gemäß Anspruch 11 wird eine reduzierte Mischwirkung in der Pumpe durch einen zweiten Wärmeträger-Rücklaufringkanal kompensiert, der einen konzentrischen, axial nach oben gerichteten Bereich des Pumpengehäuses umschließt und mit dem Zulauf zum Propeller bzw. Laufrad über eine Vielzahl von über den Umfang des Pumpengehäuses verteilten Öffnungen in Strömungsverbindung steht und an den der Austritt des Haupt-Wärmetauschers angeschlossen ist, anstatt an den den Mantelraum umschließenden Wärmeträger-Rücklaufringkanal gemäß der Lösung nach Anspruch 1. Der konzentrische, axial nach oben gerichtete Bereich des Pumpengehäuses im Zulaufbereich zum Propeller bewirkt eine rotationssymmetrische Anströmung des Propellers. Diese wird mit dem zweiten, diesen Bereich umschließenden Wärmeträger-Rücklaufringkanal dazu genutzt, den Rücklaufstrom aus dem Haupt-Wärmetauscher über den gesamten Umfang des Zulaufbereiches verteilt dem Wärmeträgerstrom zuzudosieren, der aus dem Mantelraum über den ersten Wärmeträger-Rücklaufringkanal kommt und im Zulaufbereich rotationssymmetrisch - d. h. ebenfalls über den gesamten Umfang des Zulaufbereichs - verteilt ist. Hierdurch wird auf einfache Weise bereits durch die Ausbildung der Zudosierung eine wirksame weitgehende Durchmischung des aus dem Mantelraum austretenden Wärmeträgers mit dem Wärmetauscher-Rücklauf erzielt, so dass ein langer Strömungsweg bis zum Eintritt in den Propeller zur ausreichenden Durchmischung nicht mehr notwendig ist. Dadurch kann der Propellerbereich wiederum ausschließlich für eine Optimierung der Wärmeträgerströmung - d. h. des Pumpenwirkungsgrades - ausgebildet sein.

Als weitere Lösung schlägt Anspruch 13 vor, die Strömung des Wärmeträgers auf der Druckseite des Propellers durch eine besondere Ausbildung des Umlenkungsbereiches der Wärmeträgerströmung aus der Vertikalen in die Horizontale zu optimieren und dabei gleichzeitig die Kosten für die Herstellung des Umlenkungsbereiches zu reduzieren. Dadurch, dass die Wände des Umlenkungsbereiches nur aus der Verschneidung zweier Zylinder gebildet sind, von denen einer vertikal in Strömungsrichtung und der andere horizontal senkrecht zur Strömungsrichtung des Wärmeträgers verläuft, wird zum einen eine äußerst verwirbelungsarme Umlenkung des Wärmeträgers erzielt, da keine toten Ecken - d. h. keine Totwassergebiete - entstehen und scharfe Umlenkungen und plötzlich Querschnittserweiterungen vermieden werden. Zum anderen wird eine Fertigung aus einfachen, kostengünstigen Bauteilen ermöglicht. Diese verwirbelungsarme Umlenkung ist selbst schon eine Optimierung der Strömung und bewirkt eine Erhöhung des Pumpenwirkungsgrades. Sie ermöglicht darüber hinaus aber auch noch eine weitere Strömungsoptimierung im stromaufwärtigen Bereich, da diese nicht mehr durch eine im Umlenkungsbereich entstehende Strömung mit umfangreichen Wirbelgebieten zunichte gemacht wird.

Vorzugsweise ist bei einem Rohrbündelreaktor nach Anspruch 1 der Austritt des Haupt-Wärmetauschers durch einen Anschlusskanal an den Wärmeträger-Rücklaufringkanal angeschlossen und sind in diesem Anschlusskanal Einrichtungen zum anteilsmäßigen Aufteilen des Wärmetauscher-Rücklaufs auf die beiden Ringkanalabschnitte angeordnet. Hierdurch kann der Rücklaufringkanal von solchen Einrichtungen freigehalten werden - bis auf eine Trennwand zur Teilung des Rücklaufringkanals in die beiden Ringkanalabschnitte, so dass in den Ringkanalabschnitten ausschließlich Vorrichtungen zum Erzeugen der Rotation und diese auch in unmittelbarer Nähe der Anschlussstelle angeordnet werden können. Zudem können Einflüsse aus dem Anschlusskanal selbst durch die entsprechenden Einrichtungen im Anschlusskanal auch wieder ausgeglichen werden.

Dabei kann z. B. in günstiger Weiterbildung der Erfindung die Länge der Strömungswege vom Austritt des Haupt-Wärmetauschers zu den beiden Abschnitts-Anschlussstellen voneinander abweichen und die Ausbildung und/oder Anordnung der Aufteil-Einrichtungen im Anschlusskanal auch diese Abweichungen ausgleichen. Wenn der Anschlusskanal beispielsweise bogenförmig ausgebildet ist, sodass der radial innere Strömungsweg kürzer ist als der radial äußere Strömungsweg, kann der Haupt-Wärmetauscher möglichst nahe an der Außenseite des Reaktormantels montiert werden, wodurch zum einen der Bauraumbedarf reduziert wird und zum anderen die Abstützung des Haupt-Wärmetauschers an der Abstützung des Reaktormantels einfacher ausgebildet werden kann.

In günstiger Weiterbildung der Erfindung ist mindestens ein Neben-Wärmetauscher an den Haupt-Wärmetauscher angeschlossen und ist der Rücklauf jedes Neben-Wärmetauschers ebenfalls über die Aufteil-Einrichtungen geführt. Solche Neben-Wärmetauscher sind Wärmetauscher für weitere Prozessschritte, beispielsweise Eintrittsgas-Vonnrärmer oder Dampfüberhitzer. Ein direkter Anschluss von Neben-Wärmetauschern an den Wärmeträger-Rücklaufringkanal würde eine Schieflage in dem Mengenverhältnis der in den Ringkanalabschnitten strömenden Wärmeträgermengen erzeugen. Wenn der Rücklauf jedes Neben-Wärmetauschers an den Haupt-Wärmetauscher angeschlossen ist und der Rücklauf über die Aufteil-Einrichtungen geführt ist, wird der Rücklauf automatisch mit verteilt und somit keine Schieflage erzeugt. Ein direkter Anschluss von Neben-Wärmetauschern an den Wärmeträger-Rücklaufringkanal ist allenfalls denkbar, wenn vernachlässigbare Wärmeträgermengen eingeleitet werden.

Vorteilhafterweise sind die Anschlussstelle des Haupt-Wärmetauschers und die der außenliegenden Pumpe um 90° bis 180° zueinander versetzt angeordnet. Wenn die Länge eines Ringkanalabschnitts mindestens ein Viertel des Umfangs des Reaktormantels beträgt, wird bereits mit einer relativ geringen Anzahl von Vorrichtungen zum Erzeugen einer Rotation des Rücklaufstroms - d. h. mit relativ geringer Rotationsgeschwindigkeit - eine ausreichende Mischwirkung erzielt. Bei einem Versatz von 180° liegt Symmetrie vor, was die Konstruktion und Fertigung insbesondere der Aufteil-Einrichtungen erheblich vereinfacht.

In einer bevorzugten Ausführungsform der Erfindung sind die mindestens zwei Vorrichtungen zum Erzeugen einer Rotation jeweils Leitbleche, die an mindestens einer der Kanalwände angebracht und dazu ausgelegt sind, senkrecht zur Ringkanallängsachse in dem Rücklaufstrom eine tangentiale Geschwindigkeitskomponente zu erzeugen. Auf diese Weise wird mit geringem technischen Aufwand eine Rotation in dem Rücklaufstrom um die Längsachse der Ringkanalabschnitte erzeugt.

Dabei ist besonders bevorzugt in Strömungsrichtung der aus den Mantelöffnungen austretenden Wärmeträger-Teilströme jeweils eine Vorrichtung zum Erzeugen einer Rotation angeordnet, die dem jeweiligen Teilstrom durch eine Umlenkung eine tangentiale Geschwindigkeitskomponente aufprägt. Hierdurch wird die Mischwirkung eindeutiger, da jedem aus den Mantelöffnungen austretenden Wärmeträger-Teilstrom eine Vorrichtung zugeordnet ist, die den Teilstrom in eine zum Rücklaufstrom tangentiale Richtung umlenkt und somit die Mischwirkung verstärkt.

Vorteilhafterweise ist am Zusammenlauf der zwei Ringkanalabschnitte vor der Pumpe eine Vorrichtung zur Aufhebung der Rotation angebracht. Auf diese Weise werden Verwirbelungsgebiete im zusammengeführten Wärmeträger-Gesamtstrom weitestgehend vermieden und wird somit die Strömung hinsichtlich einer Verbesserung des Wirkungsgrades der Pumpe optimiert.

In besonders günstiger Weiterbildung der Erfindung weist dabei die Vorrichtung mehrere horizontale, vertikal beabstandete Bleche auf, die sich nach der in Strömungsrichtung der Ringkanalabschnitts-Wärmeträgerströme jeweils letzten Mantelöffnung über die gesamte Breite der beiden Ringkanalabschnitte bis in den Pumpenzulauf hinein erstrecken und so Zwischenräume mit jeweils zwei Eintrittsseiten in den Ringkanalabschnitten und einer Austrittsseite im Pumpenzulauf ausbilden. Eine Aufhebung der Rotation im Wärmeträgerstrom wird somit auf äußerst wirksame und dabei kostengünstige Weise erzielt.

Besonders bevorzugt sind dabei die Zwischenräume abwechselnd über die Höhe auf einer der beiden Eintrittsseiten zumindest teilweise verschlossen. Hierdurch wird eine Schichtung der beiden aufeinandertreffenden Wärmeträgerströme aus den Ringkanalabschnitten und damit eine weitere Verbesserung der Mischung dieser beiden Abschnitts-Wärmeträgerströme erzielt.

Bei einer bevorzugten Ausführungsform eines Rohrbündelreaktors nach Anspruch 11 sind die Pumpengehäuseöffnungen als Zudosiereinrichtungen ausgebildet und in Axialrichtung der Pumpe mindestens zwei Reihen von Zudosiereinrichtungen übereinander angeordnet, wobei die Reihen in Radialrichtung der Pumpe zueinander versetzt in den Zulauf münden. Mit dieser sowohl in axialer als auch in radialer Richtung versetzten Einleitung des Rücklaufs aus dem Haupt-Wärmetauscher in den Zulauf der Pumpe wird eine besonders fein verteilte Zudosierung erreicht, so dass durch die Zudosierung eine äußerst intensive Durchmischung erzielt wird und somit ein extrem kurzer Strömungsweg von der Zudosierungsstelle zum Propeller ausgebildet sein kann.

Bei einer bevorzugten Ausführungsform eines Rohrbündelreaktors nach Anspruch 13 weist die außenliegende Pumpe auf der Druckseite des Propellers einen Diffusor auf, dessen Querschnittserweiterung zumindest teilweise durch einen konvergierenden Kern erzeugt wird. Die Diffusorwirkung unter weitgehender Vermeidung von Strömungsablösungen von den Wänden des Strömungskanals ermöglicht eine optimale Umwandlung von kinetischer Energie in Druckenergie. Dabei ermöglicht die Anordnung eines konvergierenden Kerns, die Kanalaußenwand mit einem konstanten Durchmesser auszubilden - d. h. als Zylinderabschnitt auszubilden.

Vorzugsweise schließt sich an den Umlenkungsbereich abströmseitig ein Kanal an, dessen Querschnitt sich in Strömungsrichtung erweitert. Mit dieser Maßnahme wird ein weiterer Diffusor vom Austritt aus der Pumpe bis zum Eintritt in den Wärmeträger-Vorlaufringkanal gebildet, wodurch die oben erwähnte Umwandlung von kinetischer Energie in Druckenergie noch weiter optimiert wird.

Die Erfindung wird nachfolgend anhand der Zeichnungen beispielshalber noch näher erläutert. Es zeigen:
- Figur 1a und 1b: in schematischer Darstellung eine erste Ausführungsform eines erfindungsgemäßen Rohrbündelreaktors, wobei Figur 1b ein Querschnitt längs Line Ib-Ib in Figur 1a ist;
- Figur 2a: eine Querschnittsansicht längs Linie IIa-IIa in Figur 1b, mit einer ersten Ausführungsform für Vorrichtungen zum Erzeugen einer Rotation des Rücklaufstroms um die Längsachse der Ringkanalabschnitte;
- Figur 2b: eine Querschnittsansicht längs Linie IIb-IIb in Figur 2a;
- Figur 3: eine der Figur 2a ähnliche Querschnittsansicht mit einer zweiten Ausführungsform für Vorrichtungen zum Erzeugen einer Rotation des Rücklaufstroms um die Längsachse der Ringkanalabschnitte;
- Figur 4a: eine Draufsicht längs Linie IVa-IVa in Figur 4b, mit einer Vorrichtung zur Aufhebung der Rotation;
- Figur 4b: einen Querschnitt längs Linie IVb-IVb in Figur 4a;
- Figur 4c: in schematischer Darstellung eine Ausführungsform eines erfindungsgemäßen Umlenkungsbereiches auf der Druckseite eines Pumpenpropellers;
- Figur 4d: eine Schnittansicht längs Linie IVd-IVd in Figur 4c;
- Figur 5a: in schematischer Darstellung einen Querschnitt durch eine Pumpe einer zweiten Ausführungsform eines erfindungsgemäßen Rohrbündelreaktors;
- Figur 5b: in vergrößerter Darstellung das Detail Vb aus Figur 5a;
- Figur 5c: in vergrößerter Darstellung das Detail Vc aus Figur 5a;
- Figur 5d: eine Draufsicht längs Linie Vd-Vd in Figur 5c;
- Figur 6: in schematischer Darstellung eine Teilquerschnittsansicht eines erfindungsgemäßen Rohrbündelreaktors, mit einer Ausführungsform für einen Haupt-Wärmetauscher;
- Figur 7a: einen Längsschnitt durch einen Wärmeträger-Vorlaufringkanal, längs Linie VIIa - Vlla Figur 7b; und
- Figur 7b: einen Querschnitt längs Linie VIb - VIIb in Figur 7a, mit dem sich an den Wärmeträger-Vorlaufringkanal anschließenden Teil des Mantelraums.

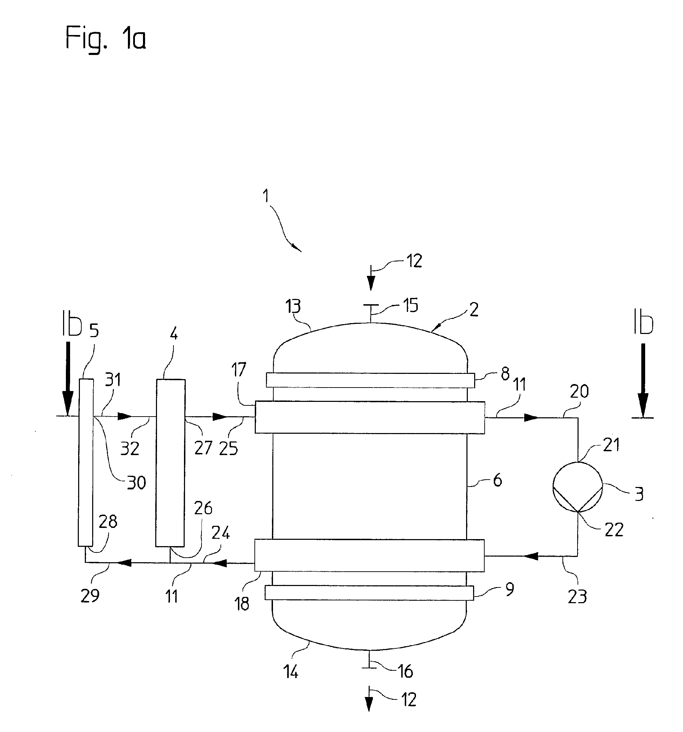

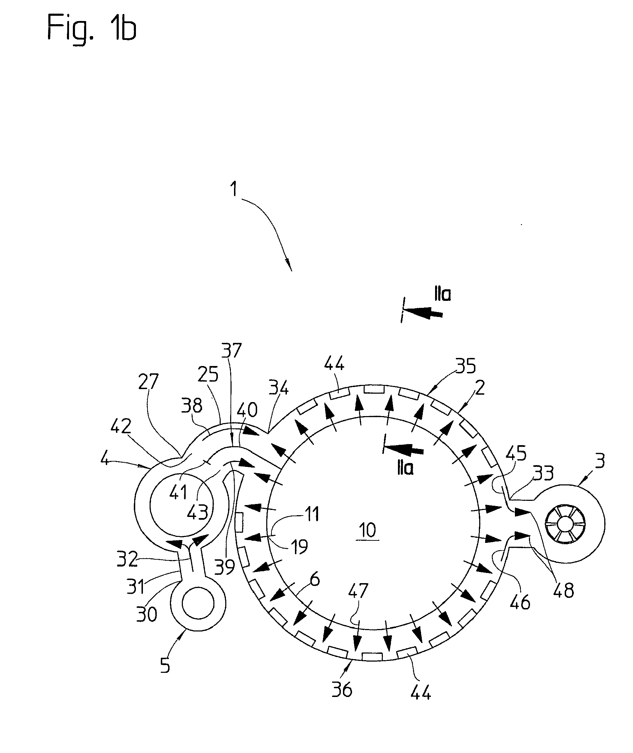

Die Figuren 1a und 1b zeigen einen Rohrbündelreaktor 1, der einen Reaktorhauptteil 2, eine außenliegende Wärmeträgerpumpe 3, einen außenliegenden Haupt-Wärmetauscher 4 sowie einen außenliegenden Neben-Wärmetauscher 5 aufweist.

Der Reaktorhauptteil 2 weist einen zylindrischen Reaktormantel 6 auf, der ein (in Figur 1b nicht dargestelltes) Bündel vertikaler Reaktionsrohre 7 umschließt. Die Reaktionsrohre 7 sind an ihren beiden Enden abdichtend in einem oberen bzw. unteren Rohrboden 8, 9 befestigt. Reaktormantel 6 und Rohrböden 8, 9 bilden gemeinsam einen Mantelraum 10 aus, in dem die Reaktionsrohre 7 von einem Wärmeträger 11 umströmt werden. Die Reaktionsrohre 7 werden im dargestellten Ausführungsbeispiel von oben nach unten von einem Reaktionsgas 12 durchströmt.

Über beide Rohrböden 8,9 erstrecken sich Reaktorhauben 13, 14, im dargestellten Ausführungsbeispiel über dem oberen Rohrboden 8 als Gaseintrittshaube 13 und über dem unteren Rohrboden 9 als Gasaustrittshaube 14. Die Enden der Reaktionsrohre 7 sind offen und stehen mit den Reaktorhauben 13, 14 in Strömungsverbindung. Das Reaktionsgas 12 strömt aus einer nicht dargestellten Zuleitung durch einen Einlassstutzen 15 in die Gaseintrittshaube 13 und von dort durch die Reaktionsrohre 7 hindurch. Aus den Reaktionsrohren 7 strömt das reagierte Gas 12 in die Gasaustrittshaube 14 und von dieser durch einen Gasaustrittsstutzen 16 in eine hier nicht dargestellte Ableitung.

Der Reaktormantel 6 ist nahe der beiden Rohrböden 8, 9 jeweils von einem Ringkanal 17, 18 umschlossen, der mit dem Mantelraum 10 über eine Vielzahl von Mantelöffnungen 19, die in dem Reaktormantel 6 in Umfangsrichtung verteilt angeordnet sind, in Strömungsverbindung steht. Die Mantelöffnungen 19 sind nach Art und Größe so ausgebildet, dass der Wärmeträger 11 über den Umfang gleichverteilt in den Mantelraum 10 eintritt bzw. aus diesem austritt.

Im dargestellten Ausführungsbeispiel strömt der Wärmeträger 11 aus dem Mantelraum 10 in den in Figur 1a oberen Ringkanal 17, der im Folgenden als Wärmeträger-Rücklaufringkanal 17 bezeichnet wird, und von dort über eine Zulaufleitung 20 zum Zulauf bzw. Eintritt 21 der Pumpe 3. Der Austritt 22 der Pumpe 3 ist über eine Austrittsleitung 23 an den in Figur 1a unteren Ringkanal 18, der im Folgenden als Wärmeträger-Vorlaufringkanal 18 bezeichnet wird, angeschlossen, so dass der Wärmeträger 11 aus der Pumpe 3 in den Wärmeträger-Vorlaufringkanal 18 strömt und von dort aus durch die Mantelöffnungen in den Mantelraum 10 hineinströmt.

Ein Teil des Wärmeträgerstroms 11 strömt von dem Wärmeträger-Vorlaufringkanal 18 über eine Anschlussleitung 24 zu dem Haupt-Wärmetauscher 4 und von diesem über eine Rücklaufleitung 25 zum Wärmeträger-Rücklaufringkanal 17. Der Eintritt 26 des Haupt-Wärmetauschers 4 ist somit an den Wärmeträger-Vorlaufringkanal 18 angeschlossen, und der Austritt 27 des Haupt-Wärmetauschers 4 an den Wärmeträger-Rücklaufringkanal 17.

Der Neben-Wärmetauscher 5 ist parallel zum Haupt-Wärmetauscher 4 geschaltet. Der Eintritt 28 des Neben-Wärmetauschers 5 ist über eine Eintrittsleitung 29 an die Anschlussleitung 24 des Haupt-Wärmetauschers 4 angeschlossen. Der Austritt 30 des Neben-Wärmetauschers 5 ist über eine Austrittsleitung 31 an den Haupt-Wärmetauscher 4 angeschlossen, so dass der Rücklauf 32 aus dem Neben-Wärmetauscher 5 über die Rücklaufleitung 25 aus dem Haupt-Wärmetauscher 4 in den Wärmeträger-Rücklaufringkanal 17 eingeleitet wird.

In Figur 1b ist ein Horizontalschnitt durch den Rohrbündelreaktor 1 aus Figur 1a in Höhe des Wärmeträger-Rücklaufringkanals 17 dargestellt. Insbesondere sind der Figur 1b die Strömungswege des Wärmeträgers 11 aus dem Mantelraum 10 und aus dem Neben- und dem Haupt-Wärmetauscher 4, 5 in den Wärmeträger-Rücklaufringkanal 17 und aus diesem in die Pumpe 3 zu entnehmen.

Im dargestellten Ausführungsbeispiel sind die Anschlussstellen 33, 34 der Pumpe 3 und des Haupt-Wärmetauschers 4 an den Wärmeträger-Rücklaufringkanal 17 um etwa 150° bzw. 210° zueinander versetzt. Sie liegen einander also nicht diametral gegenüber, so dass der Wärmeträger-Rücklaufringkanal 17 einen kürzeren und einen längeren Ringkanalabschnitt 35, 36 aufweist.

Aus dem Mantelraum 10 tritt der Wärmeträger 11 durch Mantelöffnungen 19, die über den gesamten Umfang des Reaktormantels 6 verteilt angeordnet sind, in die Ringkanalabschnitte 35, 36 ein.

Die Austritts- bzw. Rücklaufleitung 25, mit der der Haupt-Wärmetauscher 4 an den Wärmeträger-Rücklaufringkanal 17 angeschlossen ist, ist als bogenförmiger Anschlusskanal ausgebildet. In ihm ist eine Aufteil-Einrichtung 37 eingebaut, mit der das Mengenverhältnis der in die beiden Ringkanalabschnitte 35, 36 eingeleiteten Wärmeträgermengen bzw. -ströme 38, 39 zueinander so eingestellt ist, dass dieses Mengenverhältnis dem Längenverhältnis dieser Ringkanalabschnitte 35, 36 zueinander entspricht. Dazu weist die Aufteil-Einrichtung 37 eine Trennwand 40 auf, die in dem Anschlusskanal 25 in dessen Längsrichtung von dessen Eintrittsbereich aus bis zum Reaktormantel 6 verläuft. Sie erstreckt sich vertikal über die gesamte Höhe des Anschlusskanals 25 und ist mit dessen Wänden dicht verschweißt. Im Ringkanal 17 erstreckt sich die Trennwand 40 vertikal senkrecht zur Längsrichtung der Ringkanalabschnitte 35, 36 über den gesamten Querschnitt des Ringkanals 17 und teilt diesen in die beiden Ringkanalabschnitte 35, 36. Mit der oberen und unteren Wand des Ringkanals 17 und mit dem Reaktormantel 6 ist sie dicht verschweißt. Im Eintrittsbereich des Anschlusskanals 25 ist die Trennwand 40 mit einem zu ihr querverlaufenden Blech 41 verschweißt, das zusammen mit den Wänden des Anschlusskanals 25 Zudosieröffnungen 42, 43 für den Wärmeträger-Rücklauf in die beiden Ringkanalabschnitte 35, 36 ausbildet. Die Größe der Zudosieröffnungen 42, 43 ist so ausgebildet, dass das Mengenverhältnis der in die beiden Ringkanalabschnitte 35, 36 einströmenden Wärmeträgerströme 38, 39 dem Längenverhältnis der beiden Ringkanalabschnitte 35, 36 entspricht.

An den Haupt-Wärmetauscher 4 wiederum ist der Neben-Wärmetauscher 5 angeschlossen, dessen Wärmeträger-Rücklauf 32 durch den Haupt-Wärmetauscher 4 hindurch zum Anschlusskanal 25 strömt und mittels diesem entsprechend dem oben beschriebenen Mengenverhältnis auf die beiden Ringkanalabschnitte 35, 36 mitaufgeteilt wird.

In den Ringkanalabschnitten 35,36 sind eine Vielzahl von Vorrichtungen 44 angeordnet, die in dem Rücklaufstrom 45, 46, der sich in den Ringkanalabschnitten 35, 36 aus dem Rücklauf 38, 39 aus dem Haupt- und dem Neben-Wärmetauscher 4, 5 sowie den durch die Mantelöffnungen 19 aus dem Mantelraum 10 eintretenden Wärmeträger-Teilströmen 47 zusammensetzt und im Folgenden auch als Gesamt-Rücklaufstrom bezeichnet wird, eine Rotation um die Längsachse der Ringkanalabschnitte 35, 36 erzeugen. Die Wärmeträger-Teilströme 47 aus den Mantelöffnungen 19 treffen quer auf den in Längsrichtung der Ringkanalabschnitte 35, 36 jeweils strömenden Gesamt-Rücklaufstrom 45, 46 auf, so dass durch die Rotationsmischung eine besonders effektive Durchmischung erfolgt.

Der Rücklauf 38, 39 aus den Wärmetauschern 5, 4 und die durch die Mantelöffnungen 19 eintretenden Wärmeträger-Teilströme 47 vereinigen sich somit zu einem Gesamt-Rücklaufstrom 45, 46, dem die jeweils stromabwärts noch eintretenden Wärmeträger-Teilströme 47 zugemischt werden.

Vor dem Zulauf zur außenliegenden Pumpe 3 vereinigen sich die beiden Gesamt-Rücklaufströme 45, 46 aus den beiden Ringkanalabschnitten 35, 36 zu einem einzigen Wärmeträger-Gesamtstrom 48, der in die Pumpe 3 eintritt.

Die beiden aufeinander treffenden Gesamt-Rücklaufströme 45, 46 aus den beiden Ringkanalabschnitten 35, 36 weisen gleiche Temperaturen auf, da zum einen eine gleichmäßige Durchmischung des Wärmeträger-Rücklaufs 38, 39 mit den Wärmeträger-Teilströmen 47 aus dem Mantelraum 10 in beiden Ringkanalabschnitten 35, 36 erfolgt und darüber hinaus die Strömungsmengen in den Ringkanalabschnitten 35, 36 deren Längenverhältnis entspricht, so dass in beiden Ringkanalabschnitten 35, 36 nicht nur eine gleichermaßen wirksame Durchmischung, sondern dabei auch die gleiche Mischtemperatur erzielt wird.

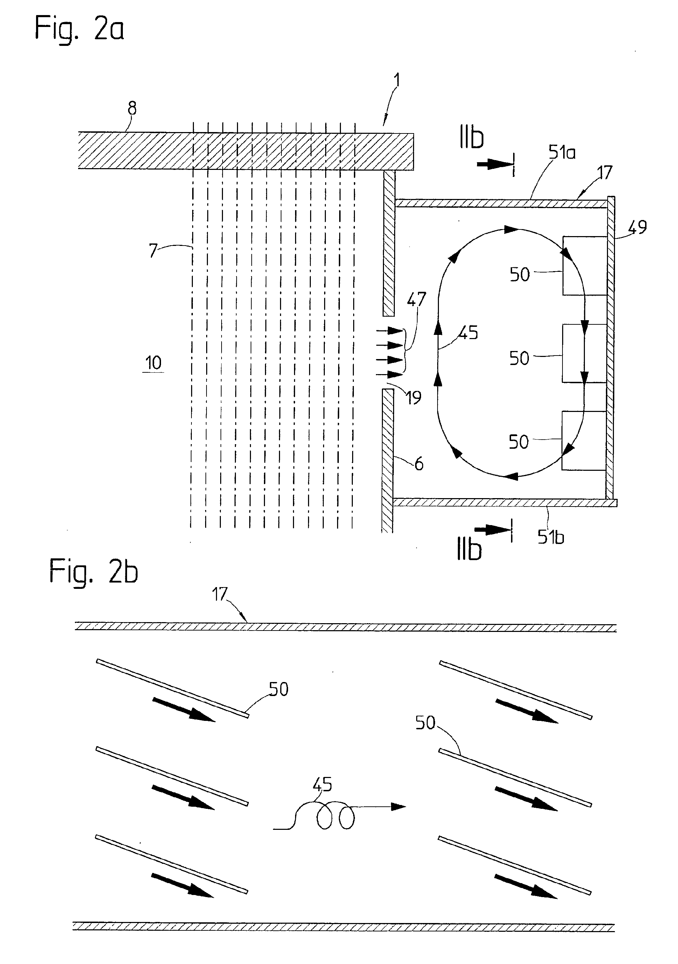

Die Figuren 2a und 2b zeigen eine erste Ausführungsform für im Wärmeträger-Rücklaufringkanal 17 angeordnete Vorrichtungen zum Erzeugen einer Rotation des Rücklaufstroms um die Längsachse der Ringkanalabschnitte.

In Figur 2a ist der Teil eines Mantelraums 10 des Reaktors 1 dargestellt, an den ein Abschnitt 35 eines Wärmeträger-Rücklaufringkanals 17 angrenzt. Die den Mantelraum 10 vertikal durchlaufenden Reaktionsrohre 7 sind nur schematisch durch ihre Längsachsen dargestellt. Die Reaktionsrohre 7 münden in den oberen Rohrboden 8, in dem sie gas- und flüssigkeitsdicht befestigt sind, und stehen mit der den Rohrboden 8 überspannenden (hier nicht dargestellten) oberen Reaktorhaube 13 in Strömungsverbindung. Der Wärmeträger-Rücklaufringkanal 17 ist an die Außenseite des Reaktormantels 6 angeschweißt und steht mit dem Mantelraum 10 über eine Vielzahl von Mantelöffnungen 19 in Strömungsverbindung. Die Mantelöffnungen 19 sind über den gesamten Umfang des Reaktormantels 6 verteilt angeordnet, so dass auch eine entsprechend verteilte Vielzahl von Wärmeträger-Teilströmungen 47 durch die Mantelöffnungen 19 aus dem Mantelraum 10 in den Wärmeträger-Rücklaufringkanal 17 eintritt. Im dargestellten Ausführungsbeispiel sind die Mantelöffnungen 19 auf halber Höhe des Wärmeträger-Rücklaufringkanals 17 angeordnet.

An der den Mantelöffnungen 19 gegenüberliegenden vertikalen Außenwand 49 des Wärmeträger-Rücklaufringkanals 17 sind schräg verlaufende Strömungsleitbleche 50 angeordnet, die im dargestellten Ausführungsbeispiel in Strömungsrichtung von oben nach unten verlaufen. Diese Strömungsleitbleche 50 erstrecken sich um eine vorgegebene Strecke in den Wärmeträger-Rücklaufringkanal 17 hinein, vorzugsweise um 10% bis 40% der lichten Breite des Ringkanals 17. Die Neigung der Strömungsleitbleche 50 gegenüber der Horizontalen beträgt im dargestellten Ausführungsbeispiel ca. 20°. Abhängig von den Gegebenheiten, z. B. Art des Wärmeträgers und Abmessungen des Wärmeträger-Rücklaufringkanals 17, liegt die Neigung vorzugsweise im Bereich von 10° bis 45°.

Auf diese Weise wird mit geringem Fertigungsaufwand der Rücklaufstrom 45 über den gesamten Querschnitt des Wärmeträger-Rücklaufringkanals 17 in Rotation gebracht und so eine äußerst wirksame Vermischung mit den aus den Mantelöffnungen 19 quer eintretenden Wärmeträger-Teilströmen 47 erzielt, so dass eine vollständige Durchmischung gewährleistet ist.

Der aus den Wärmetauschern 4, 5 in den Wärmeträger-Rücklaufringkanal 17 eintretende Wärmeträgerstrom 38, 39 durchströmt den gesamten Querschnitt des jeweiligen Ringkanalabschnitts 35, 36 zwischen dessen Außenwänden 6, 49, 51a, 51b. Irgendwelche Einbauten, die den Rücklaufstrom 45, 46 auf nur einen Teil des Querschnitts beschränken, sind nicht notwendig. Sowohl der Wärmetauscher-Rücklauf 38, 39 als auch die Wärmeträger-Teilströme 47 aus den Mantelöffnungen 19 werden unmittelbar in den vollen Querschnitt des Rücklaufringkanals 17 eingeleitet und dort durchmischt.

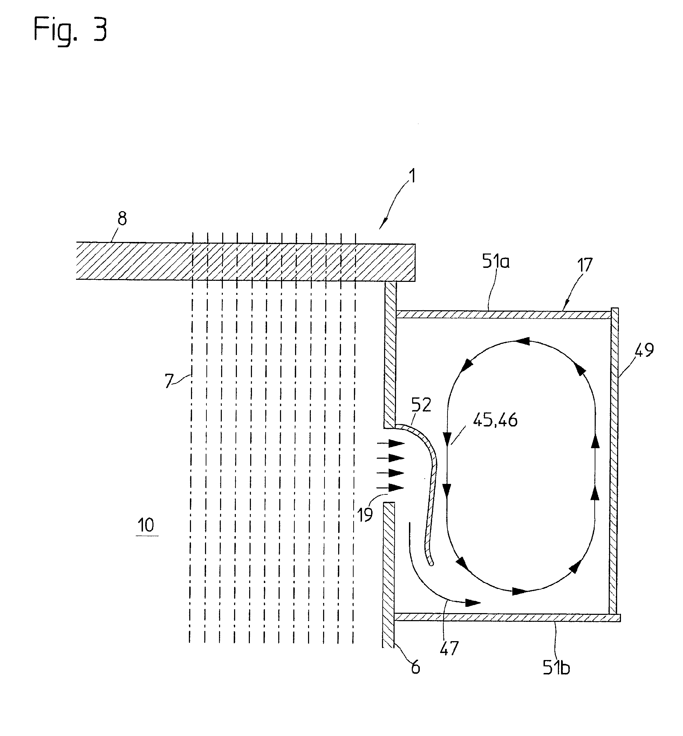

Bei der in Figur 3 dargestellten Ausführungsform ist im Wärmeträger-Rücklaufringkanal 17 vor jeder Mantelöffnung 19 ein Strömungsleitblech 52 angeordnet, das den Wärmeträger-Teilstrom 47 unmittelbar nach dessen Eintritt in den Rückiaufringkanal 17 in Richtung dessen Bodenblech 51 b umleitet und auf diese Weise dem in axialer Richtung strömenden Gesamt-Rücklaufstrom 45, 46 in Querrichtung exzentrisch zuführt. Diese exzentrische Zuleitung der Wärmeträger-Teilströme 47 versetzt den Rücklaufstrom 45, 46 in Rotation, was wiederum eine wirksame Durchmischung von Rücklaufstrom 45, 46 und Wärmeträger-Teilstrom 47 bewirkt.

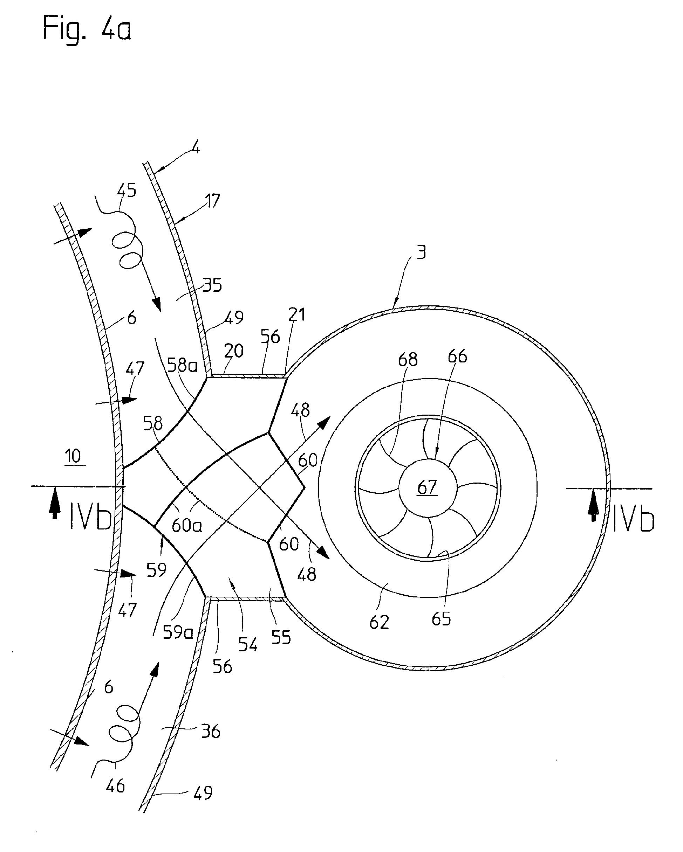

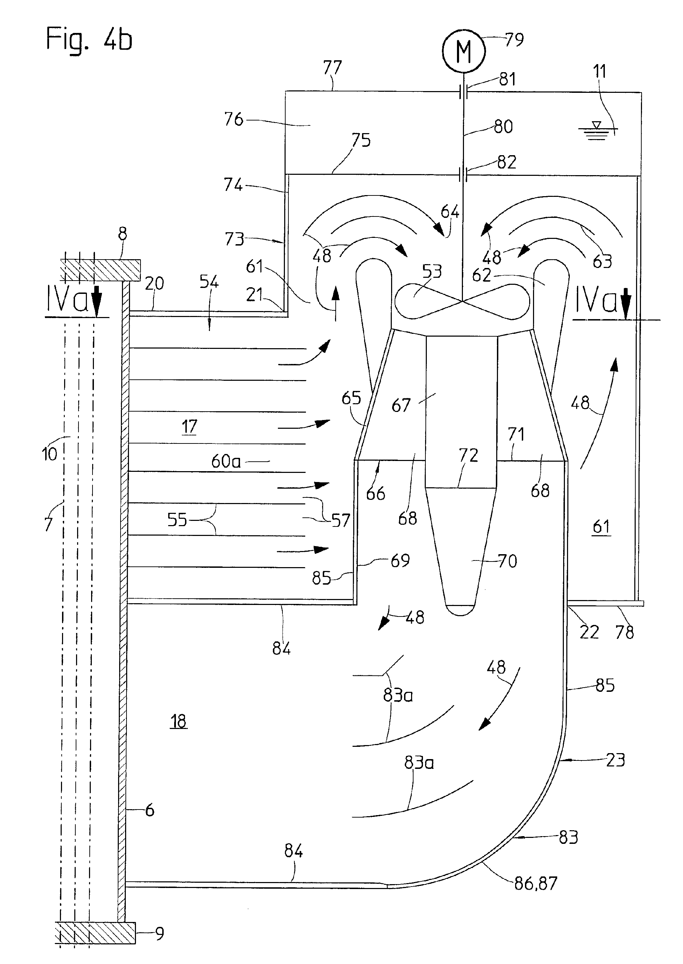

In den Figuren 4a bis 4d ist eine strömungsoptimierte Pumpe 3 einschließlich Pumpenzulauf 20, 21, Pumpenpropeller bzw. -laufrad 53 und Pumpenablauf 22, 23 dargestellt. Wie in Figur 4b dargestellt, grenzen in diesem Ausführungsbeispiel der Wärmeträger-Rücklaufringkanal 17 und der Wärmeträger-Vorlaufringkanal 18 auf halber Höhe des Reaktormantels 6 unmittelbar aneinander an und erstrecken sich bis nahe an den oberen bzw. unteren Rohrboden 8, 9.

Figur 4a zeigt den Zusammenlauf der beiden Gesamt-Rücklaufströme 45, 46 bzw. Abschnitt-Wärmeträgerströme aus den beiden Ringkanalabschnitten 35, 36 zu einem gemeinsamen Wärmeträger-Gesamtstrom 48 und den Zulauf 20, 21 zum Propeller bzw. Laufrad 53. Am Zusammenlauf ist eine Vorrichtung 54 zur Aufhebung der Rotation in den ankommenden Abschnitts-Wärmeträgerströmen 45, 46 angeordnet. Die Vorrichtung 54 weist mehrere vertikal übereinander geschichtete, horizontal verlaufende und vertikal beabstandete Bleche 55 auf. Die Bleche 55 erstrecken sich über die gesamte Breite des Wärmeträger-Rücklaufringkanals 17 bzw. der beiden Ringkanalabschnitte 35, 36. Sie sind zwischen den letzten Mantelöffnungen 19 der beiden Ringkanalabschnitte 35, 36 am Reaktormantel 6 angeschweißt und erstrecken sich in einen Zulaufkanal 20 hinein, an dessen Wänden 56 sie ebenfalls angeschweißt sind. Die Zwischenräume 57 zwischen den Blechen 55 bilden in jedem Ringkanal 35, 36 eine Eintrittsseite 58, 59 und im Zulaufkanal 20 eine Austrittsseite 60 aus. Sie können über die Höhe abwechselnd auf einer der beiden Eintrittsseiten 58, 59 mittels einer Sperrwand 58a, 59a zumindest teilweise verschlossen sein. In den Zwischenräumen 57 sind Strömungsleitbleche 60a angeordnet. Die Abschnitts-Wärmeträgerströme 45, 46 durchströmen die Zwischenräume 57 zwischen den Blechen 55 und strömen dann gemeinsam als Wärmeträger-Gesamtstrom 48 in einen ringförmigen Pumpeneintrittsraum 61, der zum Pumpenlaufrad 53 führt.

Das Pumpenlaufrad 53 ist oberhalb des Wärmeträger-Rücklaufringkanals 17 angeordnet und von einer Einlaufdüse 62 in Umfangsrichtung umschlossen. Der Wärmeträger 11, 48 durchströmt den Pumpeneintrittsraum 61 zunächst von unten nach oben und dann das Laufrad 53 von oben nach unten.

Über dem Pumpenlaufrad 53 und der Einlaufdüse 62 ist ein kreisringförmiges Eintrittsleitblech 63 koaxial angeordnet, das in radialer Richtung bogenförmig mit konvexer Oberseite ausgebildet ist. Dieses Eintrittsleitblech 63 bewirkt eine möglichst verwirbelungsarme rotationssymmetrische Strömungsumkehr des Wärmeträgerstroms 48 zum Pumpenlaufrad 53 hin. Ein Teil des Wärmeträgerstroms 48 wird längs der Unterseite des Eintrittsleitbleches 63 zum Pumpenlaufrad 53 hingeführt, der andere Teil längs der Oberseite des Eintrittsleitbleches 63 durch dessen zentrale Öffnung 64 hindurch.

An ihrem stromabwärtigen Ende ist die Einlaufdüse 62 in Umfangsrichtung dicht mit einem koaxial angeordneten Kegelmantel 65 verbunden, der sich in Strömungsrichtung erweitert und ein Austrittsleitrad 66 mit Innenverdränger 67 umschließt. Der lichte Durchmesser des Kegelmantels 65 an seinem sich verjüngenden stromaufwärtigen Endes entspricht in etwa dem Außendurchmesser des Pumpenlaufrades 53. Der Innenverdränger 67 ist zylindrisch ausgebildet und innerhalb des Kegelmantels 65 koaxial angeordnet. Er ist über radial verlaufende Austrittsleitflügel 68 des Austrittsleitrades 66 an dem Kegelmantel 65 befestigt.

Stromabwärts schließt sich an den Kegelmantel 65 ein zylinderförmiger Diffusormantel 69 an, in dem ein Kerndiffusor 70 koaxial angeordnet ist, der sich bis zum stromabwärtigen Ende des Diffusormantels 69 erstreckt. Der Kerndiffusor 70 ist mit seinem stromaufwärtigen Ende am Innenverdränger 67 befestigt und verjüngt sich bzw. konvergiert bis zu seinem stromabwärtigen Ende, so dass sich entsprechend der Strömungsquerschnitt im Diffusormantel 69 erweitert. Die Diffusorwirkung unter weitgehender Vermeidung von Strömungsablösungen von den Wänden des Diffusormantels 69 ermöglicht eine optimale Umwandlung von kinetischer Energie in Druckenergie und führt somit zu einer Erhöhung des Pumpenwirkungsgrades. An ihren Verbindungsstellen 71, 72 sind die Durchmesser von Kegelmantel 65 und Diffusormantel 69 sowie von Innenverdränger 67 und Kerndiffusor 70 jeweils gleich, so dass Querschnittssprünge nicht vorhanden sind.

Ein zylindrisches Pumpengehäuse 73 umschließt Diffusormantel 69, Kegelmantel 65, Einlaufdüse 62 und Eintrittsleitblech 63 und ist an den Austritt des Zulaufkanals 20 und damit der Vorrichtung 54 zur Aufhebung der Rotation des Wärmeträgerstroms 45, 46 angeschlossen.

Das Pumpengehäuse 73 bildet zwischen zylindrischer Gehäusewand 74 einerseits und Diffusormantel 69, Kegelmantel 65 sowie Einlaufdüse 62 andererseits den ringförmigen Pumpeneintrittsraum 61 aus, in dem der aus den geschichteten Blechen 55 austretende Wärmeträgerstrom 48 sich um den gesamten Umfang vom Diffusormantel 69, Kegelmantel 65 und Einlaufdüse 62 verteilt und nach oben strömt. Unmittelbar vor dem Eintritt von oben in die Einlaufdüse 62 kehrt das bogenförmige Eintrittsleitblech 63 den Wärmeträgerstrom 48 von seiner nach oben gerichteten Strömung in die nach unten gerichtete Strömung hin zum Pumpenlaufrad 53 um.

In einem vorgegebenen Abstand oberhalb des Eintrittsleitbleches 63 ist ein horizontaler Trennboden 75 eingezogen, der an den Wänden 74 des Pumpengehäuses 73 befestigt ist und den Pumpeneintrittsraum 61 nach oben von einem Ausgleichsgefäß 76 trennt. In dem Ausgleichsgefäß 76 befindet sich ebenfalls Wärmeträger 11, der durch (hier nicht dargestellte) Ausgleichsöffnungen in den Pumpeneintrittsraum 61 eintreten und aus diesem austreten kann, um thermisch bedingte Volumenänderungen auszugleichen. Das Ausgleichs- bzw. Ausdehnungsgefäß 76 wird durch eine obere Begrenzungswand bzw. einen Deckel 77 des Pumpengehäuses 73 abgeschlossen. Den unteren Abschluss 78 des Pumpengehäuses 73 bildet ein horizontaler Boden, durch den der Diffusormantel 69 hindurchtritt. Der Boden 78 ist mit der Außenseite des Diffusormantels 69 dicht verschweißt.

Auf dem Deckel 77 des Pumpengehäuses 73 ist eine (nicht dargestellte) Lagerung der Pumpenwelle 80 und ein Motor 79 zum Antrieb des Pumpenlaufrads 53 angeordnet. Er ist mit dem Pumpenlaufrad 53 über eine Pumpenwelle 80 verbunden, die mittels einer oberen Wellendurchführung 81 den Deckel 77 und mittels einer unteren Wellendurchführung 82 den Trennboden 75 durchläuft.

Im Pumpenablauf 22, 23, d. h. auf der Druckseite des Laufrads 53, wird der Wärmeträgerstrom 48, der vertikal den Diffusor 69, 70 verlässt, mittels eines Umlenkbereiches 83 in die Horizontale umgelenkt. Der Umlenkbereich 83 ist stromaufwärts an den Diffusormantel 69 und stromabwärts an einen Anschlussstutzen 84 angeschlossen, der seinerseits an den Wärmeträger-Vorlaufringkanal 18 angeschlossen ist.

Der Umlenkbereich 83 ist aus Teilstücken zweier sich schneidender Zylinder 85, 86 zusammengesetzt. Der eine Zylinder 85 verläuft vertikal in Strömungsrichtung sowohl innerhalb als auch außerhalb des Pumpengehäuses 73. Innerhalb des Pumpengehäuses 73 bildet er den zylindrischen Diffusormantel 69 und außerhalb die vertikalen Teile der Wandung des Umlenkbereiches 83. Im Umlenkbereich 83 sind Strömungsleitbleche 83a angeordnet, die eine gleichmäßige Umlenkung des Wärmeträgerstroms bewirken. Die Strömungsleitbleche 83a sind vorzugsweise einfach gekrümmt in Form eines Zylinder-Teilstückes oder eines Polygonzuges.

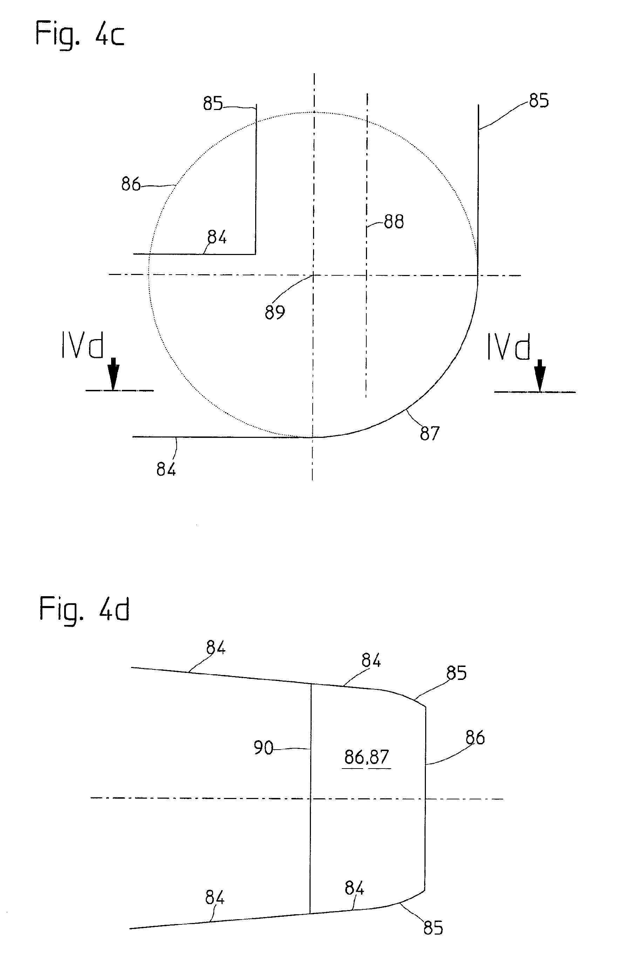

Der andere Zylinder 86 verläuft horizontal quer zur Strömungsrichtung des Wärmeträgers 11, 48, wie in Figur 4c als Kreis dargestellt. Von diesem "horizontal verlaufenden Zylinder" wird nur der als Volllinie gezeichnete Teil 87 verwendet, d. h. der in Figur 4c als Viertelkreis dargestellte Teil 87. Der gestrichelt dargestellte restliche Teil des Kreises dient hier nur der Darstellung der zylindrischen Ausgangsform.

Der Durchmesser der beiden Zylinder 85, 86 kann unterschiedlich sein, wie in Figur 4c dargestellt, so dass die Längsachsen 88, 89 der Zylinder 85, 86 sich nicht schneiden. Die Längsachse 89 des Zylinders 86 wird bevorzugt so angeordnet, dass der Teil 87 tangential in den Boden des Anschlussstutzens 84 übergeht.

In Figur 4d sind die Anteile der beiden Zylinder 85, 86 an der Ausbildung des Umlenkbereiches 83 in einer Draufsicht dargestellt. Ferner ist der Anschlussstutzen 84 mit der Anschlussnaht 90 zum Umlenkbereich 83 dargestellt. Der Anschlussstutzen erweitert sich vom Umlenkungsbereich 83 zum Anschluss an den Wärmeträger-Vorlaufringkanal 18 hin, wodurch auch im Anschlussstutzen 84 noch eine Diffusorwirkung und damit eine weitere Optimierung der Strömungsverhältnisse erzielt wird.

Die seitlichen - in Figur 4d oberen und unteren - gekrümmten Seitenwände des Umlenkungsbereiches 83 werden von Teilen des vertikal verlaufenden Zylinders 85 gebildet. Die sich daran in Strömungsrichtung anschließenden geraden - in Figur 4d nach links verlaufenden - geneigten Seitenwände werden von dem Anschlussstutzen 84 gebildet. Die stromabwärtige - in Figur 4d rechte - Abschlusswand sowie die daran anschließende, in der Zeichnungsebene liegende untere Wand werden durch die oben beschriebenen (gekrümmten) Wandteile 87 des horizontalen Zylinders 86 - wie in Figur 4c dargestellt - gebildet.

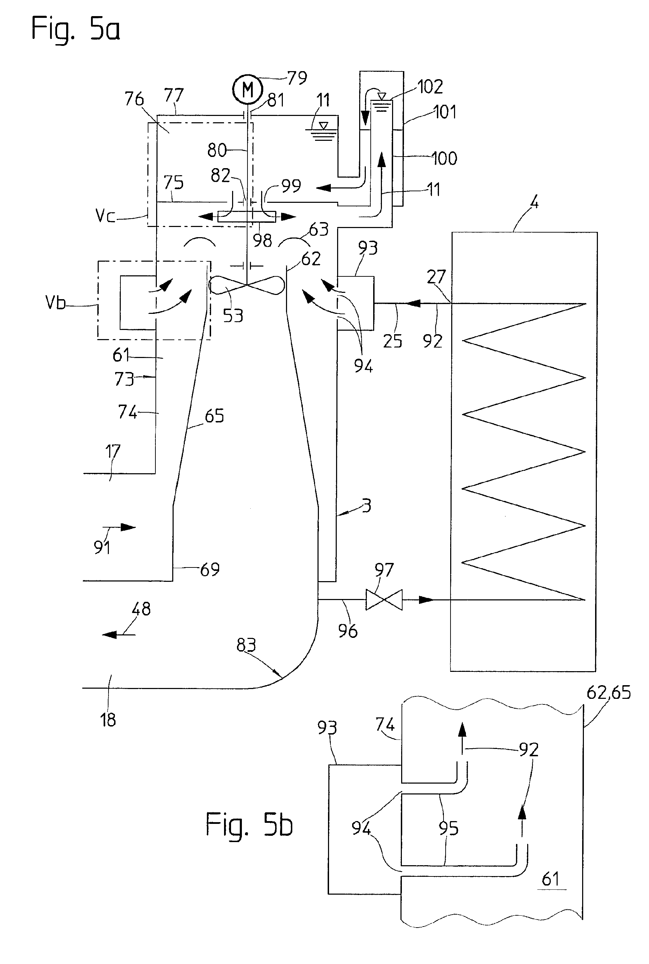

In Figur 5a ist ein ähnlicher Ausschnitt aus einem Rohrbündelreaktor dargestellt wie in Figur 4b, wobei jedoch der Austritt 27 des Haupt-Wärmetauschers 4 an die Pumpe 3 angeschlossen ist.

Bei dieser Ausführungsform besteht der Rücklaufstrom 91 im Wärmeträger-Rücklaufringkanal 17 nur aus dem Wärmeträger 11 aus dem Mantelraum 10 des Reaktors 1. Eine Vermischung mit dem Rücklauf 92 aus dem Haupt-Wärmetauscher 4 erfolgt erst im Pumpeneintrittsraum 61.

Bei der Ausführungsform gemäß Figur 5a weist das Pumpengehäuse 73 einen Ringkanal 93 auf, der - im dargestellten Ausführungsbeispiel in Höhe des Pumpenlaufrades 53 - die Gehäusewand 74 vollständig umschließt und mit dem ringförmigen Pumpeneintrittsraum 61 über eine Vielzahl von Pumpengehäuseöffnungen 94 in Strömungsverbindung steht. Sie sind über den gesamten Umfang der Gehäusewand 74 verteilt angeordnet. Die Pumpengehäuseöffnungen 94 können in mehreren Reihen übereinander, d. h. in Strömungsrichtung des Wärmeträgers 11, angeordnet sein. Vorzugsweise sind sie als Zudosiereinrichtungen 95 ausgebildet, die auch in radialer Richtung - d. h. quer zur Strömungsrichtung des Wärmeträgers 11 - versetzt zueinander in den Pumpeneintrittsraum 61 münden. Auf diese Weise wird der Wärmetauscher-Rücklauf 92 bereits fein verteilt dem Wärmeträgerstrom 91 aus dem Mantelraum 10 zugeführt, so dass schon hierdurch eine weitgehende Durchmischung erfolgt und kein langer Strömungsweg bis zum Eintritt in das Pumpenlaufrad 53 benötigt wird, um die Durchmischung in ausreichendem Maße durchzuführen.

Der Strömungskanal stromabwärts des Pumpenlaufrades 53 mit Kegelmantel 65 und Innenverdränger 67 sowie Diffusormantel 69 und Kerndiffusor 70 entspricht im wesentlichen dem aus Figur 4b, wobei Innenverdränger 67 und Kerndiffusor 70 hier nicht dargestellt sind.

Bei der in Figur 5a dargestellten Ausführungsform wird jedoch ein Teil des durchmischten Wärmeträgerstroms 48 aus dem Umlenkbereich 83 auf der Druckseite des Pumpenlaufrades 53 in den Haupt-Wärmetauscher 4 geleitet. Die Anschlussleitung 96 vom Umlenkbereich 83 zum Haupt-Wärmetauscher 4 weist ein Ventil 97 auf, mit dem die Strömungsmenge eingestellt werden kann.

Auch bei dieser Ausführungsform ist ein Eintrittsleitblech 63 angeordnet, das den Wärmeträgerstrom 91 von einer nach oben gerichteten Strömungsrichtung im ringförmigen Pumpeneintrittsraum 61 in eine nach unten zum Pumpenlaufrad 53 hin gerichtete Strömungsrichtung umkehrt. Der Pumpeneintrittsraum 61 ist ebenfalls hier durch einen Trennboden 75 nach oben gegenüber einem Ausgleichsgefäß 76 abgetrennt. Das Ausgleichsgefäß 76 ist durch einen Deckel 77 nach oben geschlossen. Auf dem Deckel 77 ist ein Motor 79 angeordnet, der über eine Pumpenwelle 80, die den Deckel 77 und den Trennboden 75 mittels zugehöriger Wellendurchführungen 81, 82 durchläuft, mit dem Laufrad verbunden ist, um dieses anzutreiben.

Im Pumpeneintrittsraum 61 nahe dem Trennboden 75 oberhalb des Eintrittsleitbleches 63 ist an der Pumpenwelle 80 noch eine Radialpumpe 98 befestigt. Im Trennboden 75 sind im Bereich der Radialpumpe 98 Durchtrittsöffnungen 99 angeordnet, mit denen das Ausgleichsgefäß 76 mit dem Pumpeneintrittsraum 61 in Strömungsverbindung steht. Der Pumpeneintrittsraum 61 ist in Höhe der Radialpumpe 98 mittels eines Steigrohrs 100 mit einem Überlaufgefäß 101 verbunden, das seinerseits wiederum mit dem Ausgleichsgefäß 76 in Strömungsverbindung steht.

Mittels der Radialpumpe 98 wird der Wärmeträger 11 in Richtung Pumpenlaufrad 53 gedrückt bzw. stromaufwärts des Laufrades 53 - d. h. auf dessen Eintritts- bzw. Saugseite - ein zusätzlicher Druck erzeugt, der ein Kavitationsrisiko für das Laufrad 53 ausschließt.

Erforderlichenfalls fördert die Radialpumpe 98 Wärmeträger 11 aus dem Ausgleichsgefäß 76 in den Eintrittsbereich des Pumpenlaufrades 53, wobei zu viel geförderter Wärmeträger 11 über das Steigrohr 100 in das Überlaufgefäß 101 und von dort zurück in das Ausgleichsgefäß 76 fließen kann.

Durch den Flüssigkeitsstand bzw. -druck im Steigrohr 100 wird ein entsprechender Flüssigkeitsdruck im Pumpeneintrittsraum 61 erzeugt. Wenn die Flüssigkeit- d. h. der Wärmeträger 11 - gerade eben aus dem Steigrohr 100 überläuft, ist ein idealer Zustand erreicht, weil dann durch die Radialpumpe 98 nicht zuviel Wärmeträger 11 gefördert wird und dabei der maximal mögliche Flüssigkeitsdruck - die sogenannte Standhöhe 102 - erreicht ist.

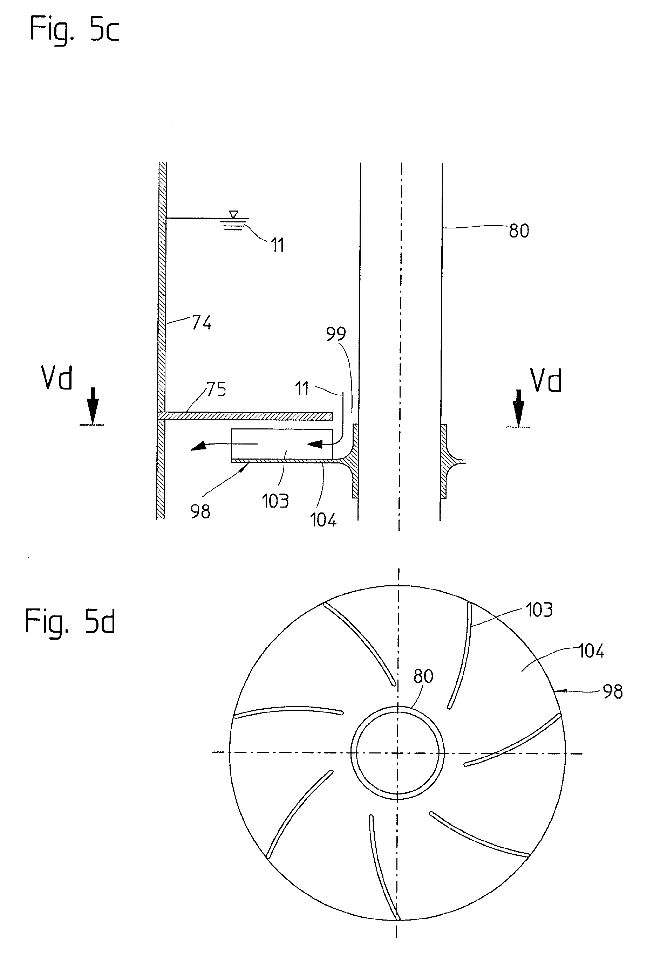

In den Figuren 5c und 5d ist die Radialpumpe 98 detailliert dargestellt. Sie weist eine Reihe von Schaufelrädern 103 auf, die im wesentlichen radial verlaufen und in Umfangsrichtung gleichmäßig verteilt auf einer horizontalen Scheibe 104 angeordnet sind. Diese horizontale Scheibe 104 ist an der Pumpenwelle 80 drehfest befestigt und erstreckt sich in radialer Richtung - gemeinsam mit den Schaufelrädern 103 - bis zu einem vorgegebenen Abstand von der Gehäusewand 74 der Pumpe 3.

Die Radialpumpe 98 ist im Pumpeneintrittsraum 61 nahe dem Trennboden 75 angeordnet. Der Trennboden 75 erstreckt sich von der Gehäusewand 74 aus in radialer Richtung bis zur Pumpenwelle 80 und bildet um diese herum einen Ring von Durchtrittsöffnungen 99 vom Ausgleichsgefäß 76 zum Pumpeneintrittsraum 61 aus, durch die hindurch der Wärmeträger 11 vom Ausgleichsgefäß 76 in die Radialpumpe 98 strömt. Die Radialpumpe 98 fördert den Wärmeträger 11 aus dem Ausgleichsgefäß 76 in den Eintrittsbereich des Pumpenlaufrades 53.

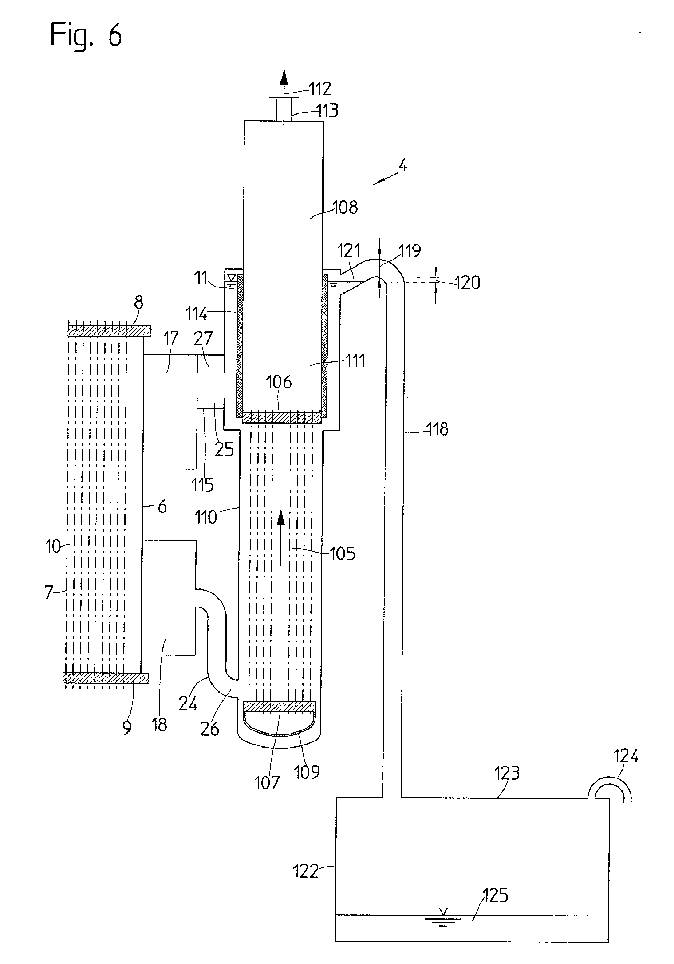

In Figur 6 ist ein Ausführungsbeispiel für einen Haupt-Wärmetauscher 4 dargestellt. Sein Eintritt 26 ist an den Wärmeträger-Vorlaufringkanal 18 und sein Austritt 27 an dem Wärmeträger-Rücklaufringkanal 17 angeschlossen. Der Wärmetauscher 4 weist ein Bündel vertikaler Wärmetauscherrohre 105 auf, deren beide Enden offen und an ihrem Außenumfang in einem oberen bzw. unteren Rohrboden 106, 107 abdichtend befestigt sind. Die im oberen Rohrboden 106 befestigten Rohrenden münden in eine längliche, sich in vertikaler Richtung erstreckende Vorkammer 108, die den oberen Rohrboden 106 überspannt. Die in dem unteren Rohrboden 106 befestigten Rohrenden münden in eine Haube 109, die den unteren Rohrboden 107 überspannt. Die Wärmetauscherrohre 105 sind nur schematisch anhand ihrer Längsachsen dargestellt.

Ein Wärmetauschergehäuse 110 umschließt das Bündel Wärmetauscherrohre 105, die Rohrböden 106, 107 sowie die Haube 109 und etwa die untere Hälfte der Vorkammer 108, die alle in dem Wärmetauschergehäuse 110 von dem Wärmeträger 11 aus dem Mantelraum 10 des Reaktors 1 umspült werden. Dieser Wärmeträger 11 wird im Kreislauf durch den Wärmeträger-Vorlaufringkanal 18, den Mantelraum 10, den Wärmeträger-Rücklaufringkanal 17 umgewälzt, wobei ein Teil des Wärmeträgers 11 vom Wärmeträger-Vorlaufringkanal 18 durch das Wärmeträgergehäuse 110 zum Wärmeträger-Rücklaufringkanal 17 strömt.

Die Wärmetauscherrohre 105, die Haube 109 und ein Teil der Vorkammer 108 ist mit einem zweiten Wärmeträger 111 - im folgenden als Wärmetauscher-Wärmeträger 111 bezeichnet - gefüllt. Dieser Wärmetauscher-Wärmeträger 111 hat eine Siedetemperatur, die dafür geeignet ist, den Mantelraum-Wärmeträger 11 durch Verdampfungskühlung zu kühlen. Soweit der bei der Verdampfungskühlung entstehende und sich in der Vorkammer 108 sammelnde Dampf 112 nicht in der Vorkammer 108 kondensiert und wieder nach unten zurückläuft, wird der Dampf 112 nach oben durch einen Austrittsstutzen 113 abgeleitet.

Der von dem Wärmetauschergehäuse 110 umschlossene Teil der Vorkammer 108, d. h. der von dem Mantelraum-Wärmeträger 11 umspülte Teil der Vorkammer 108, ist mit einer Isolierschicht 114, die auf der Außenwand der Vorkammer 108 angebracht ist, gegen die Temperatur des Mantelraum-Wärmeträgers 11 isoliert.

Der obere Rohrboden 106 liegt unterhalb der Unterkante 115 eines Anschlusskanals 25, der den Wärmeträger-Rücklaufringkanal 17 mit dem Austritt 27 aus dem Wärmetauscher 4 verbindet.

Der untere Rohrboden 107 liegt unterhalb des Wärmeträger-Vorlaufringkanals 18. Eine Anschlussleitung 24 mündet etwas oberhalb des unteren Rohrbodens 107 in das Wärmeträgergehäuse 110 und führt den Mantelraum-Wärmeträger 11 nach unten in den Haupt-Wärmetauscher 4.

Vom oberen Ende des Wärmetauschergehäuses 110 aus verläuft ein Überlaufrohr 118 zunächst um eine vorgegebene Strecke schräg nach oben, bis der lichte Querschnitt 119 des Überlaufrohres 118 um einen vorgegebenen vertikalen Abstand 120 über dem Pegel 121 des Mantelraum-Wärmeträgers 11 in dem Wärmetauschergehäuse 110 liegt. Danach erstreckt sich das Überlaufrohr 118 vertikal nach unten und mündet in einem Abscheider 122, der beispielsweise als abgedeckte Grube oder abgedecktes Gefäß ausgebildet sein kann. Aus der Abdeckung 123 des Abscheiders 122 heraus erstreckt sich ein Entlüftungsrohr 124, das zu einem sicheren Ort hin entlüftet.

Das Überlaufrohr 118 dient zum Abführen von plötzlichen Gaseinbrüchen in den Räumen, die von dem Mantelraum-Wärmeträger 11 gefüllt sind. Beispielsweise können solche Gaseinbrüche aus geplatzten Reaktions- oder Wärmetauscherrohren 7, 105 resultieren. Durch das Überlaufrohr 118 wird dann das entstehende Flüssigkeits-/Gasgemisch abgeführt. Im Abscheider 122 trennen sich die flüssigen und gasförmigen Bestandteile voneinander, wobei die Flüssigkeit 125 sich unten im Abscheider sammelt und die Gase durch das Entlüftungsrohr 124 an einen sicheren Ort abgeleitet werden.

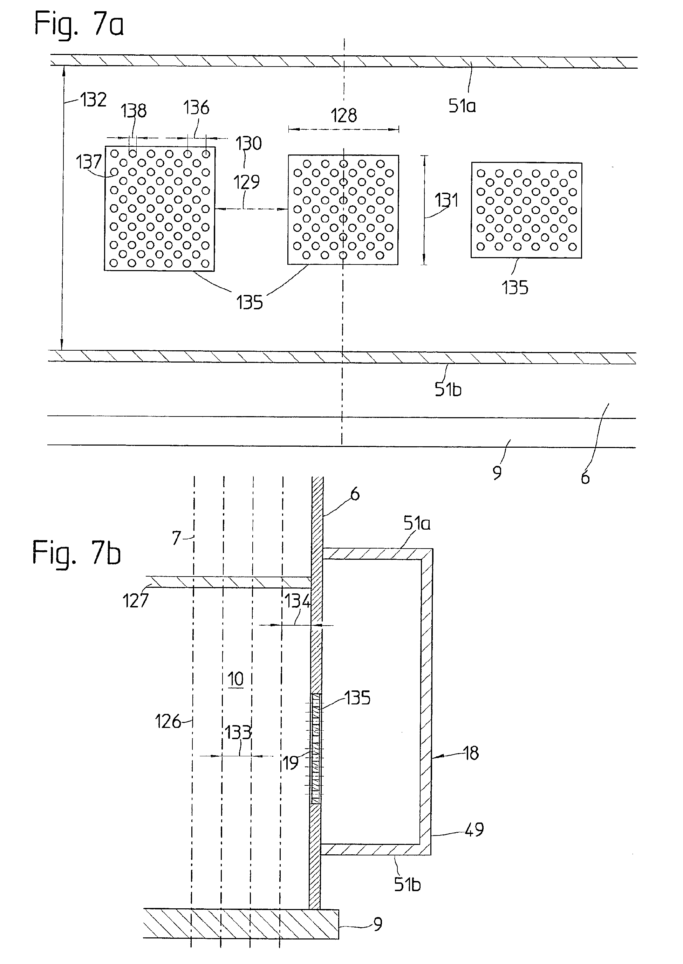

In den Figuren 7a und 7b sind Mantelöffnungen 19 im Detail dargestellt am Beispiel von Mantelöffnungen 19, die den Wärmeträger-Vorlaufringkanal 18 mit dem Mantelraum 10 verbinden. Die Art und Größe der Mantelöffnungen 19 ist so ausgebildet, dass der Wärmeträger 11 über den Umfang möglichst gleichverteilt aus dem Mantelraum 10 in den Wärmeträger-Rücklaufringkanal 17 oder aus dem Wärmeträger-Vorlaufringkanal 18 in den Mantelraum 10 eintritt, wobei im letzteren Fall der Wärmeträger 11 auch möglichst radial in den Mantelraum 10 eintreten soll.

Vorzugsweise liegen die Mantelöffnungen 19 mittig zur Querstromhöhe 126, d. h. mittig zwischen Rohrboden 8, 9 und Umlenkblech 127 oder mittig zwischen zwei Umlenkblechen 127.

Die Breite 128 der Mantelöffnungen 19 beträgt vorzugsweise 50 mm bis 500 mm, wobei das Verhältnis der Breite 128 der Mantelöffnungen 19 zu der Breite 129 des Steges 130 zwischen benachbarten Mantelöffnungen 19 vorteilhafterweise im Bereich von 0,5 bis 10 liegt. Die maximale Höhe 131 der Mantelöffnungen 19 im Verhältnis zur Höhe 132 des Ringkanals 17, 18 liegt meist im Bereich von 20 % bis 90 %.

Das Verhältnis der Breite 129 des Steges 130 zwischen benachbarten Mantelöffnungen 19 zur Teilung 133 der Reaktionsrohre 7, d. h. zum Achsabstand der Reaktionsrohre 7, wiederum liegt bevorzugt im Bereich von 1 bis 10. Und der Abstand 134 des Reaktormantels 6 zum Außendurchmesser des Rohrbündels sollte im Größenbereich von 1 bis 20 Rohrteilungen 133 liegen.

Im Ringkanal 17, 18 ist an jeder Mantelöffnung 19 ein Lochblech 135 angeordnet, das die Mantelöffnung 19 zumindest teilweise abdeckt. Dabei kann das Lochblech 135 vor oder hinter der Mantelöffnung 19 angeordnet oder in diese eingesetzt sein. Die Lochbleche 135 nebeneinander liegender Mantelöffnungen 19 können unterschiedlich ausgebildet sein entsprechend unterschiedlichen Strömungsbedingungen. Das Verhältnis von Lochteilung 136, d. h. des Achsabstandes der Löcher 137, zu Lochdurchmesser 138 liegt vorzugsweise im Bereich von 1,2 bis 4,0. Die Lochbleche 135 können auch jeweils als Lochblechpaket ausgebildet sein, das mehrere hintereinander liegende Lochbleche 135 mit deckungsgleichen Lochmustern aufweist. Das Verhältnis der Gesamtdicke eines solchen Lochblechpaketes oder - bei der Anordnung nur eines Lochbleches 135 vor einer Mantelöffnung 19 - der Dicke dieses einzelnen Lochbleches 135 zum Lochdurchmesser 138 liegt bevorzugt im Bereich von 0,2 bis 2,0. Die Löcher 137 können schräg zur Radialrichtung verlaufen, um den Wärmeträger 11 in eine bestimmte Richtung zu lenken.

## Patentansprüche

1. Rohrbündelreaktor für katalytische Gasphasenreaktionen, mit
- einem Bündel Reaktionsrohre, das von einem zylindrischen Reaktormantel umschlossen ist, der einen Mantelraum ausbildet, in dem die Reaktionsrohre von einem Wärmeträger umströmt werden, wobei die Reaktionsrohre von einem Reaktionsgas durchströmt werden;
- einem Wärmeträger-Vorlaufringkanal und einem Wärmeträger-Rücklaufringkanal, die den Reaktormantel in jeweils einem Endbereich des Zylinders umschließen und mit dem Mantelraum über eine Vielzahl von Mantelöffnungen in Strömungsverbindung stehen, wobei zumindest der Rücklaufringkanal frei von Unterkanälen ist;
- genau einer außenliegenden Pumpe, deren Eintritt an den Wärmeträger-Rücklaufringkanal und deren Austritt an den Wärmeträger-Vorlaufringkanal angeschlossen ist und die den Wärmeträger in einem Kreislauf durch den Vorlaufringkanal, den Mantelraum und den Rücklaufringkanal umwälzt;
- einem in den Kreislauf geschalteten außenliegenden Haupt-Wärmetauscher, dessen Austritt an den Wärmeträger-Rücklaufringkanal angeschlossen ist und über den ein Teil des Wärmeträgerstroms als Wärmetauscher-Rücklauf in den Wärmeträger-Rücklaufringkanal eingeleitet wird,
- wobei die Anschlussstellen der Pumpe und des Haupt-Wärmetauschers an den Wärmeträger-Rücklaufringkanal in dessen Längsrichtung zueinander versetzt sind, und
- wobei der Wärmeträger-Rücklaufringkanal an der Anschlussstelle des Haupt-Wärmetauschers durch eine quer zur Ringkanallängsachse verlaufende Trennwand in zwei Ringkanalabschnitte geteilt ist, die jeweils eine Abschnitts-Anschlussstelle für den Haupt-Wärmetauscher aufweisen, um den Wärmetauscher-Rücklauf auf die beiden Ringkanalabschnitte aufzuteilen,
**dadurch gekennzeichnet, dass**
- das Mengenverhältnis der aus dem Haupt-Wärmetauscher (4) in die Ringkanalabschnitte (35, 36) eingeleiteten Abschnitts-Wärmeträgerströme (38, 39) zueinander dem Längenverhältnis der beiden Ringkanalabschnitte (35, 36) zueinander entspricht,
- jeder Ringkanalabschnitt (35, 36) mindestens zwei Vorrichtungen (44) zum Erzeugen einer Rotation des Rücklaufstroms (45, 46) um die Längsachse der Ringkanalabschnitte (35, 36) aufweist und
- diese Vorrichtungen (44) längs der Ringkanalabschnitte (35, 36) verteilt angeordnet sind.

2. Rohrbündelreaktor nach Anspruch 1, **dadurch gekennzeichnet, dass** der Austritt (27) des Haupt-Wärmetauschers (4) durch einen Anschlusskanal (25) an den Wärmeträger-Rücklaufringkanal (17) angeschlossen ist und in diesem Anschlusskanal (25) Einrichtungen (37) zum anteilsmäßigen Aufteilen des Wärmetauscher-Rücklaufs auf die beiden Ringkanalabschnitte (35, 36) angeordnet sind.

3. Rohrbündelreaktor nach Anspruch 2, **dadurch gekennzeichnet, dass** die Länge der Strömungswege vom Austritt (27) des Haupt-Wärmetauschers (4) zur Anschlussstelle (34) an die beiden Ringkanalabschnitte (35, 36) voneinander abweicht und die Ausbildung und/oder Anordnung der Aufteil-Einrichtungen (37) im Anschlusskanal (25) auch diese Abweichungen ausgleicht.

4. Rohrbündelreaktor nach Anspruch 2 oder 3, **dadurch gekennzeichnet, dass** mindestens ein Neben-Wärmetauscher (5) an den Haupt-Wärmetauscher (4) angeschlossen ist und der Rücklauf (32) jedes Neben-Wärmetauschers (5) ebenfalls über die Aufteil-Einrichtungen (37) geführt ist.

5. Rohrbündelreaktor nach einem der vorhergehenden Ansprüche, **dadurch gekennzeichnet, dass** die Anschlussstelle (34) des Haupt-Wärmetauschers (4) und die (33) der außenliegenden Pumpe (3) um 90° bis 180° zueinander versetzt angeordnet sind.

6. Rohrbündelreaktor nach einem der vorhergehenden Ansprüche, **dadurch gekennzeichnet, dass** die mindestens zwei Vorrichtungen (44) zum Erzeugen einer Rotation jeweils Leitbleche (50) sind, die an mindestens einer (49) der Kanalwände (6, 49, 51 a, 51 b) angebracht und dazu ausgebildet sind, senkrecht zur Ringkanallängsachse in dem Rücklaufstrom (45, 46) eine tangentiale Geschwindigkeitskomponente zu erzeugen.

7. Rohrbündelreaktor nach Anspruch 6, **dadurch gekennzeichnet, dass** in Strömungsrichtung der aus den Mantelöffnungen (19) austretenden Wärmeträger-Teilströme (47) jeweils eine Vorrichtung (52) zum Erzeugen einer Rotation angeordnet ist, die dem jeweiligen Teilstrom (47) durch eine Umlenkung eine tangentiale Geschwindigkeitskomponente aufprägt.

8. Rohrbündelreaktor nach einem der vorhergehenden Ansprüche, **dadurch gekennzeichnet, dass** am Zusammenlauf der zwei Ringkanalabschnitte (35, 36) vor der Pumpe (3) eine Vorrichtung (54) zur Aufhebung der Rotation angebracht ist.

9. Rohrbündelreaktor nach Anspruch 8, **dadurch gekennzeichnet, dass** die Vorrichtung (54) mehrere horizontale, vertikal beabstandete Bleche (55) aufweist, die sich nach der in Strömungsrichtung der Ringkanalabschnitts-Wärmeträgerströme (45, 46) jeweils letzten Mantelöffnung (19) über die gesamte Breite der beiden Ringkanalabschnitte (35, 36) bis in den Pumpenzulauf (20) hinein erstrecken und so Zwischenräume (57) mit jeweils zwei Eintrittsseiten (58, 59) in den Ringkanalabschnitten (35, 36) und einer Austrittsseite (60) im Pumpenzulauf (20) ausbilden.

10. Rohrbündelreaktor nach Anspruch 9, **dadurch gekennzeichnet, dass** die Zwischenräume (57) abwechselnd über die Höhe auf einer der beiden Eintrittsseiten (58, 59) zumindest teilweise verschlossen sind.

11. Rohrbündelreaktor für katalytische Gasphasenreaktionen, mit
- einem Bündel Reaktionsrohre, das von einem zylindrischen Reaktormantel umschlossen ist, der einen Mantelraum ausbildet, in dem die Reaktionsrohre von einem Wärmeträger umströmt werden, wobei die Reaktionsrohre von einem Reaktionsgas durchströmt werden;
- einem Wärmeträger-Vorlaufringkanal und einem Wärmeträger-Rücklaufringkanal, die den Reaktormantel in jeweils einem Endbereich des Zylinders umschließen und mit dem Mantelraum über eine Vielzahl von Mantelöffnungen in Strömungsverbindung stehen;
- genau einer außenliegenden Pumpe, deren Eintritt an den Wärmeträger-Rücklaufringkanal und deren Austritt an den Wärmeträger-Vorlaufringkanal angeschlossen ist und die den Wärmeträger in einem Kreislauf durch den Vorlaufringkanal, den Mantelraum und den Rücklaufringkanal umwälzt;
- einem in den Kreislauf geschalteten außenliegenden Haupt-Wärmetauscher, dessen Austritt an den Eintrittsbereich der Pumpe angeschlossen ist und über den ein Teil des Wärmeträgerstroms als Wärmetauscher-Rücklauf in den Eintrittsbereich eingeleitet wird,
- wobei die Pumpe ein Pumpengehäuse mit einem Propeller aufweist und das Pumpengehäuse im Zulauf zum Propeller einen konzentrischen, axial nach oben gerichteten Bereich hat,
**dadurch gekennzeichnet, dass**
- ein zweiter Wärmeträger-Rücklaufringkanal (93) den nach oben gerichteten Bereich des Pumpengehäuses (73) umschließt und mit dem Zulauf (61) zum Propeller (53) über eine Vielzahl von Pumpengehäuseöffnungen (94) in Strömungsverbindung steht, die gleichmäßig über den Umfang des Pumpengehäuses (73) verteilt sind, und
- der Austritt (27) des Haupt-Wärmetauschers (4) an den zweiten Wärmeträger-Rücklaufringkanal (93) angeschlossen ist.

12. Rohrbündelreaktor nach Anspruch 11, **dadurch gekennzeichnet, dass** die Pumpengehäuseöffnungen (94) als Zudosiereinrichtungen (95) ausgebildet und in Axialrichtung der Pumpe (3) mindestens zwei Reihen von Zudosiereinrichtungen (95) übereinander angeordnet sind, wobei die Reihen in Radialrichtung der Pumpe (3) zueinander versetzt in den Zulauf (61) münden.

13. Rohrbündelreaktor für katalytische Gasphasenreaktionen, insbesondere nach einem der vorhergehenden Ansprüche, mit
- einem Bündel Reaktionsrohre, das von einem zylindrischen Reaktormantel umschlossen ist, der einen Mantelraum ausbildet, in dem die Reaktionsrohre von einem Wärmeträger umströmt werden, wobei die Reaktionsrohre von einem Reaktionsgas durchströmt werden;
- einem Wärmeträger-Vorlaufringkanal und einem Wärmeträger-Rücklaufringkanal, die den Reaktormantel in jeweils einem Endbereich des Zylinders umschließen und mit dem Mantelraum über eine Vielzahl von Mantelöffnungen in Strömungsverbindung stehen;
- mindestens einer außenliegenden Pumpe, deren Eintritt an den Wärmeträger-Rücklaufringkanal und deren Austritt an den Wärmeträger-Vorlaufringkanal angeschlossen ist und die den Wärmeträger in einem Kreislauf durch den Vorlaufringkanal, den Mantelraum und den Rücklaufringkanal umwälzt;
**dadurch gekennzeichnet, dass**
die außenliegende Pumpe (3) einen Propeller (53) aufweist, der auf seiner Druckseite einen Umlenkungsbereich (83) der Strömung (48) aus der Vertikalen in die Horizontale aufweist, dessen Wände durch die Verschneidung zweier Zylinder (85, 86) entstehen, von denen einer (85) vertikal in Strömungsrichtung und der andere (86) horizontal senkrecht zur Strömungsrichtung verläuft.

14. Rohrbündelreaktor nach Anspruch 13, **dadurch gekennzeichnet, dass** die außenliegende Pumpe (3) auf der Druckseite des Propellers (53) einen Diffusor (69, 70) aufweist, dessen Querschnittserweiterung zumindest teilweise durch einen konvergierenden Kern (70) erzeugt wird.

15. Rohrbündelreaktor nach Anspruch 13 oder 14, **dadurch gekennzeichnet, dass** sich an den Umlenkungsbereich (83) abströmseitig ein Kanal (84) anschließt, dessen Querschnitt sich in Strömungsrichtung erweitert.
